# EUROPÄISCHE PATENTSCHRIFT

(11) **EP 2 525 459 B1**
(45) Veröffentlichungstag und Bekanntmachung des Hinweises auf die Patenterteilung: **31.12.2014**
(21) Anmeldenummer: 12168116.7
(22) Anmeldetag: 15.05.2012
(51) Int. Cl.: H02G 3/12, H02G 3/04

(54) **Befestigung für Geräteträger**
Fixing for device holder
Fixation pour support d'appareils

(30) Priorität: 20.05.2011 CH 8672011
(43) Veröffentlichungstag der Anmeldung: 21.11.2012
(73) Patentinhaber: Agro AG, 5502 Hunzenschwil (CH)
(72) Erfinder:
(74) Vertreter: Rentsch Partner AG

(56) Entgegenhaltungen:
- EP-A2- 0 710 751
- EP-A2- 1 322 013
- WO-A1-98/53541
- US-A1- 2011 005 799

## Beschreibung

Die Erfindung betrifft einen Geräteträger, der zur Befestigung eines Geräts, insbesondere eines elektrischen Geräts, an einer Gebäudewand teilweise in der Gebäudewand angebracht ist, nach dem Oberbegriff der unabhängigen Patentansprüche.

### STAND DER TECHNIK

Es bestehen verschiedene Lösungen für die Befestigung von elektrischen Geräten, wie etwa Schalterdosen und Lampenanschlüsse, oder anderen Einrichtungen in einer Gebäudewand mit zusätzlicher Materialauflage, wie etwa einer Aussen- oder Innenfassade, Zimmerwänden, Decken oder auch Bodenflächen, auf welchen z. B. ein Isolationsmaterial, Verputzmaterial, etc. aufgebracht wird. Hierfür können Geräteträger verwendet werden, die eine Basisplatte, die an einer innen liegenden festen Wandkonstruktion befestigt wird, und einen Gerätehalter aufweisen, der über ein Trägerelement beabstandet zur Basisplatte angeordnet ist. Zwischen der Basisplatte und dem Gerätehalter können die zusätzlichen Materialien an der Wandkonstruktion befestigt werden, wobei sie im Wesentlichen von der festen Wandkonstruktion gehalten werden. Da die Materialien auf der Wandkonstruktion unterschiedlich dick sein können, ist es wünschenswert, den Abstand zwischen Basisplatte und Gerätehalter variieren zu können. Ferner können innerhalb der Dämm- oder Verputzmaterialien entlang der Gebäudewand Kabelführungen erforderlich sein, die mittels der Geräteträger zu den elektrischen Geräten geführt werden können. Die Führung der Kabel entlang der Wand und in eine Gerätedose am Gerätehalter soll eine einfache und unkomplizierte Elektrifizierung der Gebäudewand ermöglichen.

Aus der EP 0710751 A2 ist beispielsweise ein Element zur Befestigung von Apparaten und Gegenständen auf einer aussenisolierten Gebäudefassade bekannt. Das Element weist einen Träger auf, der von einer Grundplatte absteht. Eine Montageplatte weist ein Führungsrohr auf, das auf den Träger teleskopisch aufgeschoben werden kann. Der Träger und das Führungsrohr sind innen hohl ausgebildet. Mittels einer seitlichen Schraubverbindung kann das Führungsrohr auf dem Träger befestigt werden. Ein Kabel kann seitlich entlang des Trägers bis zur Montageplatte oder in einen Einlasskasten auf der Montageplatte geführt werden. Eine ähnliche Konstruktion ist aus der WO 90/08240 bekannt, bei der eine Befestigungsvorrichtung für Fassadenelemente mit einer Grundplatte, von der ein Träger abragt, und einer Montagefläche, die mittels Schienen auf dem Träger teleskopierbar ist, vorgesehen ist. Bei diesen Vorrichtungen muss ein Kabel aussen am Träger angeordnet werden und das Material auf der Wandkonstruktion muss um den Träger und um das Kabel verlegt werden, wobei eine Beschädigung des Kabels möglich ist.

In der FR 2740623 ist eine Wandmontage einer Kabelführung gezeigt, bei der ein innerhalb der Wand geführtes Kabel seitlich in eine Hülse eingeführt wird, deren eine Öffnung nach aussen aus der Wand weist. Die Hülle weist am Innenumfang in Längsrichtung verlaufende Führungsnuten auf. Ein Gerät kann mittels Schrauben über der Öffnung befestigt werden, die in die Führungsnuten geschraubt werden. Eine Schalterdose gemäss der DE 3403053 A1 weist eine Sockelhülse mit mehreren seitlichen Öffnungskanälen zur Einführung von elektrischen Zu- und Ableitungen auf. Die Öffnungskanäle treffen senkrecht auf die Sockelhülse. Eine zylindrische Verlängerung kann entlang einer Führung in die Sockelhülse eingeschoben werden, so dass die Gesamtlänge der Schalterdose in diskreten Stufen eingestellt werden kann. In Sacklöcher in der Umfangswand der Sockelhülse werden Schrauben zur Befestigung der Verlängerung mit den Löchern eingebracht. Die Umleitung der Kabel nach dem Einführen in die Hülse muss um mindestens 90° in dem beengten Raum der Hülse erfolgen und ist daher schwierig.

Die EP 1863145 A2 zeigt eine Dose für elektrische Kabel, die aus einem ersten Dosenteil mit Rohreinführungen und einem zweiten Dosenteil zur Verlängerung des ersten Dosenteils aufgebaut ist. Das erste Dosenteil wird aus mehreren unterschiedlichen Dosenteilen mit unterschiedlicher Zahl von Rohreinführungen ausgewählt. Das zweite Dosenteil wird ebenfalls aus unterschiedlichen Dosenteilen mit unterschiedlicher Länge ausgewählt. Je nach gewünschter Anzahl an Rohreinführungen und Länge der Dose werden die ersten und zweiten Dosenteile zusammen gesetzt. Dabei verrasten die Dosenteile durch Einschnappen. Das erste Dosenteil weist einen nach innen erhöht ausgeformten Boden mit Umlenkflächen auf, welche ein Kabel aus den Rohreinführungen zur Achse der Dosenteile hin umlenkt. Eine nachträgliche Verstellung des Abstands zwischen Einlass und Auslass der Dose ist nicht möglich. Ferner treffen alle in die Dose eingeführten Kabel innerhalb der Dose in einem Punkt auf einander und können sich gegenseitig blockieren.

In der EP 2278674 A1 ist eine Dose für elektrische Verkabelungen gezeigt, die ein zylindrisches Rohr mit einer Vielzahl von Anschlussleitungen aufweist, die senkrecht zur Rohrachse angeordnet sind. Die Anschlussleitungen münden in einen Boden und weisen einen konischen Bereich auf, so dass sie ein Kabel in Richtung eines oberen Randes des Rohrs lenken. Am oberen Rand sind Sacklöcher in Längsrichtung des Rohrs vorgesehen, um z. B. eine Abdeckung oder Schalter festschrauben zu können. Auch hier treffen die in die Dose eingeführten Kabel innerhalb der Dose auf einander und können sich gegenseitig blockieren.

Aus der US 2011/0005799 A1 ist eine elektrische Bodendose bekannt, die eine Hülse mit senkrecht dazu verlaufenden Anschlussleitungen am einen Ende und einer Steckerdose am anderen Ende aufweist. Die Länge der Bodendose kann entsprechend der Dicke eines Bodens angepasst werden. Die Steckerdose kann mit Schrauben in der Umfangswand der Hülse befestigt werden.

Bei den bekannten Geräteträgern ist es oftmals aufwendig, die Basisplatte an einer Wandkonstruktion zu befestigen, ein weiteres Wandmaterial anzubringen und zuletzt ein gewünschtes Gerät am Halter des Geräteträgers zu fixieren. Dabei können z. B. bei einem genauen Abmessen der erforderlichen Länge des Trägers in Abhängigkeit von einer Dicke des Wandmaterials Komplikationen auftreten. Wie erwähnt, erfordert die Einführung von Kabeln aus einem Wandbereich bis zur gewünschten Position im Geräteträger eine gewisse Geschicklichkeit. Ebenso sind beim Anbringen eines Gerätehalters am Träger mittels einer Verschraubung mehrere Handgriffe erforderlich. Eine Montage eines Geräteträgers nach dem Stand der Technik ist somit zeitaufwendig und umständlich.

Es ist eine Aufgabe der vorliegenden Erfindung, einen Geräteträger zur Befestigung eines Geräts an einer Gebäudewand zu schaffen, der eine schnelle und einfache Montage an der Gebäudewand ermöglicht, in einfacher Weise an unterschiedliche Gebäudewände oder Geräte anpassbar ist, eine einfache Konstruktion aufweist, eine Elektrifizierung erleichtert und als zuverlässige Halterung für ein Gerät dient.

Diese Aufgabe wird nach der Erfindung von einem Geräteträger nach Anspruch 1 gelöst. Vorteilhafte Ausgestaltungen und unterschiedliche Ausführungsformen eines solchen Geräteträgers gehen aus den Unteransprüchen hervor.

Ein Geräteträger nach der vorliegenden Erfindung, der zur Befestigung eines Geräts an einer Gebäudewand zumindest teilweise in einer Gebäudewand angeordnet ist, umfasst ein Basiselement zur Befestigung innerhalb der Gebäudewand, ein Trägerelement, das mit einem Ende von dem Basiselement abragt und einen Gerätehalter zur Aufnahme eines Geräts, der am anderen Ende des Trägerelements angeordnet ist und von ausserhalb der Gebäudewand zugänglich ist. Im Rahmen der vorliegenden Erfindung sollen unter einer Gebäudewand sowohl vertikal als auch horizontal verlaufende Gebäudeflächen verstanden werden, also z. B. Aussenfassaden, Deckenkonstruktionen, Bodenflächen und auch schräg verlaufende Dachwände. Als Basiselement kann ein Sockel, eine Platte oder der gleichen verwendet werden, die an einer Wandkonstruktion beispielsweise durch eine Verschraubung oder durch Verkleben befestigt werden können. Das Trägerelement ist vorzugsweise länglich und geradlinig ausgebildet und kann zur Anpassung an bestimmte Vorgaben, z. B. bzgl. der Dicke eines Isolationsmaterials, das auf die Wandkonstruktion aufgebracht wird, abgelängt werden.

Das Trägerelement ragt vorzugsweise senkrecht von einer Fläche des Basiselements ab, kann aber auch geneigt angeordnet sein. Der Gerätehalter kann beispielsweise als Gerätedose oder auch nur als Montageplatte vorgesehen sein, die mit einer Befestigungsvorrichtung am Trägerelement befestigt werden können. Vorzugesweise wird der Gerätehalter lösbar befestigt. Nach Fertigstellung der Gebäudewand durch das Aufbringen weiterer Wandmaterialien über dem Basiselement und um das Trägerelement bleibt zumindest der Gerätehalter zur Montage eines Geräts zugänglich.

Nach einem ersten Aspekt der vorliegenden Erfindung ist das Trägerelement hohl ausgebildet und weist einen durchgehenden Innenraum auf, der sich von einem Ende zum anderen Ende des Trägerelements erstreckt. An dem einen Ende weist das Trägerelement weinigstens eine seitliche in einer Umfangsfläche des Trägerelements vorgesehene Öffnung auf zur Einführung z. B. eines Kabels. An dem anderen Ende ist das Trägerelement in Richtung des Gerätehalters offen, vorzugsweise mündet der Innenraum in den Gerätehalter durch eine Öffnung im Gerätehalter. Der durchgehende Innenraum dient z. B. dazu ein Kabel von einem Ende des Geräteträgers zum anderen Ende zu führen. Somit kann ein Kabel von einer innen in der Gebäudewand liegenden Wandkonstruktion durch das aufliegende Wandmaterial zum Gerätehalter und somit zu einem Gerät in oder an dem Gerätehalter geführt werden. Weiter ist wenigstens ein Einführelement vorgesehen, das seitlich am Trägerelement angeordnet ist und in das Innere des Trägerelements weist oder führt. Dabei schliesst eine Längsfläche des wenigstens einen Einführelements, die zum Trägerelement führt und als Einführfläche dienen kann, mit einer Längsachse des Trägerelements in Richtung des Gerätehalters einen stumpfen Winkel ein. Die Längsfläche verläuft somit in Längsrichtung auf die Längsachse des Trägerelements zu und schliesst mit dem Trägerelement in Richtung des Gerätehalters einen Winkel > 90° ein. Das Einführelement kann beispielsweise als Einführrampe oder Einführkanal ausgebildet sein, wobei die Einführrampe z. B. auch als halbrunde Schale ausgebildet sein kann. Der stumpfe Winkel kann beispielsweise zwischen 95° und 140°, vorzugsweise zwischen 100° und 120° liegen.

Ein Kabel oder eine Kabelführung, die zunächst z. B. entlang einer Fläche einer Wandkonstruktion senkrecht auf das Trägerelement des Geräteträgers zu verläuft und dann durch das Trägerelement und aus dem Gerätehalter heraus geführt werden soll, wird über die Längsfläche das Einführelements bereits in Richtung des Geräteträger angehoben, bevor es in das Trägerelement eintritt. Dadurch kann das Kabel oder die Kabelführung sicher zum Geräteträger geführt werden und gleichzeitig erfolgt eine sanfte Umlenkung aus der Richtung entlang der Wandfläche in Richtung des Geräteträgers, da keine engen Biegeradien notwendig sind. Dadurch wird das Verlegen des Kabels und die Montage des Geräteträgers vereinfacht.

In einer Ausführungsform eines erfindungsgemässen Geräteträgers kann das wenigstens eine Einführelement am Trägerelement angeordnet sein. Vorzugsweise ist das Einführelement, beispielsweise in Form eines Einführkanals, an dem Trägerelement angeformt und ist somit ein integraler Bestandteil des Trägerelements.

In einer anderen Ausführungsform kann das wenigstens eine Einführelement auf einer Montagefläche des Basiselements angeordnet sein. Die Einführfläche ist in diesem Fall auf die seitliche Öffnung im Trägerelement hin ausgerichtet. Ein Kabel, das entlang der Einführfläche geführt wird, wird somit unmittelbar durch die Öffnung in das Trägerelement geleitet. Vorzugsweise ist das Einführelement aus dem Basiselement ausgeformt und somit einstückig mit diesem ausgebildet.

In einer vorteilhaften Ausführungsform ist der Geräteträger nach der vorliegenden Erfindung mit wenigstens einem Paar mit zwei Einführelementen versehen, wobei die beiden Einführelemente auf einander gegenüber liegenden Seiten des Trägerelements vorgesehen sind und die Längsachsen, bzw. Längsflächen der Einführelemente zueinander und zur Längsachse des Trägerelements versetzt angeordnet sind. Demnach werden zwei Kabel oder Kabelführungen, die im Wesentlichen von zwei gegenüberliegenden Seiten an der Gebäudewand auf einander zu laufenden, durch die Versetzung der Längsflächen innerhalb des Trägerelements an einander vorbei geführt. Zudem werden sie versetzt zur Längsachse des Trägerelements in dieses eingeführt und können im Inneren parallel neben einander in Richtung des Gerätehalters verlaufen. Es ist also beim Einführen der Kabel nicht gesondert darauf zu achten, dass sich die Kabel nicht gegenseitig behindern, da diese zwangsläufig an einander vorbei geführt werden.

In einer weiteren Ausführungsform eines Geräteträgers nach der Erfindung kann ein Einführelement in Form eines Einführkanals konisch ausgebildet sein und sich in Richtung des Trägerelements aufweiten. Dabei kann der Einführkanal beispielsweise in Längsrichtung mit einer Aussenseite auf dem Basiselement aufliegen oder zumindest parallel zu diesem verlaufen, so dass diese Aussenseite im Wesentlichen senkrecht zur Längsachse des Trägerelements verläuft. Auf Grund der konischen Form verläuft die gegenüber liegende Längsseite des Einführkanals winkelig auf die Achse des Trägerelements zu und schliesst mit dieser einen stumpfen Winkel ein. Die gewinkelt angeordnete Längsseite, bzw. der zugehörige Bereich des Umfangs des konischen Einführkanals, bildet eine Längsfläche im Sinne der Erfindung. In diesem Fall ist eine Führungsseite der Längsfläche in Richtung des Basiselements hin ausgerichtet. Im Gegensatz dazu sind bei den vorher beschriebenen Ausführungsformen die Führungsseiten der Längsflächen zum Gerätehalter hin ausgerichtet.

Ferner kann der Geräteträger an der Längsfläche eine Befestigungseinrichtung aufweisen, mit der ein Führungsrohr für ein Kabel entlang der Längsfläche befestigbar ist. Das Führungsrohr ist beispielsweise als übliches Leerrohr ausgebildet und weist eine Perforation oder Riffelung auf, um leicht gebogen werden zu können und dennoch eine ausreichende radiale Steifigkeit auf zu weisen. Die Befestigungseinrichtung kann z. B. durch elastisch auslenkbare Schnapparme vorgesehen sein, die z. B. in einer Umfangswand eines Einführkanals ausgebildet sind und in Längsrichtung des Kanals verlaufen. Beim Einschieben eines Führungsrohrs, wird der Schnapparm entgegen der Elastizitätskraft radial zur Achse des Einführkanals ausgelenkt und hält durch seine elastische Rückstellkraft das Führungsrohr. Der Schnapparm kann beispielweise auch einen Vorsprung aufweisen, der in einer Einschnappposition formschlüssig in die Riffelung eingreift und durch die Rückstellkraft dort in einer Blockierstellung gehalten wird. Weiter kann eine Befestigungseinrichtung bei einem Einführelement durch eine teilzylindrisch geformte Einführfläche derart realisierte werden, dass die teilzylindrische Fläche das Führungsrohr soweit umschliesst, dass dieses sicher gehalten wird. Beim Einsetzen des Führungsrohrs in das Einführelement durch den offenen Bereich zwischen zwei sich gegenüberliegenden Rändern der teilzylindrischen Fläche, werden diese Ränder teilweise radial aufgebogen und schnappen hinter dem Führungsrohr wieder zusammen. Dadurch entsteht ein Passsitz zwischen dem Führungsrohr und dem Einführelement. Das Führungsrohr kann somit in einfacher Weise in das Einführelement eingeklickt werden.

Nach einer weiteren Variante eines Geräteträgers nach der vorliegenden Erfindung kann der Einführfläche gegenüberliegend im Inneren des Trägerelements eine Umlenkfläche angeordnet sein, die den Verlauf der Einführfläche in Richtung des Gerätehalters umlenkt. Die Umlenkfläche kann als schräg zur Einführfläche und schräg zur Längsachse des Trägerelements verlaufende Fläche, wobei die Umlenkfläche sowohl mit der Längsfläche als auch mit der Achse des Trägerelements einen stumpfen Winkel einschliesst. Sie kann auch als gebogene Fläche vorgesehen sein, die sich von der Einführfläche in Richtung der Längsachse biegt. Vorzugsweise ist die Umlenkfläche an einem Umlenkelement ausgebildet, dass im Inneren des Trägerelements vorgesehen ist und zwei Umlenkflächen aufweist, die jeweils zu einem Einführelement eines Einführelementepaares hin ausgerichtet sind. Die beiden Umfangsflächen sind somit symmetrisch zueinander in entgegen gesetzte Richtungen angeordnet.

Vorzugsweise ist die Umlenkfläche, bzw. das Umlenkelement abtrennbar im Trägerelement angeordnet ist und kann an dem einen Ende des Trägerelements aus diesem heraus genommen werden. Hierfür können z. B. Sollbruchstellen vorgesehen sein. Da die Umlenkflächen den Einführelementen des Geräteträgers im Inneren gegenüber liegen, kann entlang zweier Einführelement ein Kabel quer zur Längsachse durch ein Trägerelement hindurch geführt werden, sobald die Umlenkflächen entnommen wurden. Ein Kabel tritt dann an einer Seite einer Umfangsfläche des Trägerelements ein und an einer anderen Seite der Umfangsfläche des Trägerelements wieder aus.

Wie vorher erwähnt kann das Trägerelement in eine Öffnung im Gerätehalter münden. Die Öffnung des Gerätehalters kann auch eine abnehmbare Abdeckung aufweisen, die z. B. mit Sollbruchstellen am Gerätehalter befestigt ist. Vorzugsweise kann die Abdeckung beim Aufsetzen des Gerätehalters auf das Trägerelement durch den Rand des Trägerelements herausgebrochen werden.

Das Basiselement kann eine Öffnung aufweisen, die zur Wandfläche hin ausgerichtet ist, durch welche die Umlenkfläche bzw. des Umlenkelement entnommen werden kann. Somit besteht nach Entnahme der Umlenkflächen ein Zugang durch das Basiselement in das Trägerelement in Längsrichtung des Trägerelements. Beispielsweise kann ein aus einer inneren Wandkonstruktion austretendes Kabel oder eine solche Kabelführung durch diese Öffnung in das Trägerelement und zum Gerätehalter des Geräteträgers geführt werden.

Die Variante einer abtrennbaren Umlenkfläche, bzw. eines abtrennbaren Umlenkelements, weist einen erfinderischen Gedanken auf auch ohne, dass eine Längsfläche des wenigstens einen Einführelements, die zum Trägerelement führt, mit einer Längsachse des Trägerelements in Richtung des Gerätehalters einen stumpfen Winkel einschliesst. Es bleibt daher vorbehalten auf diesen Erfindungsgedanken einen eigenen unabhängigen Patentanspruch zu richten.

Nach einer weiteren Variante eines Geräteträgers nach der vorliegenden Erfindung kann das Trägerelement durch eine Verbindungsvorrichtung, wie etwa eine Rast-, Schnapp-, Steck-oder Klemmverbindung, mit dem Basiselement verbindbar sein. Beispielsweise können an einem von Trägerelement und Basiselement wenigstens ein Schnapparm und am anderen von Trägerelement und Basiselement wenigstens eine Schnappkante vorgesehen sein, so dass beim Zusammenfügen von Trägerelement und Basiselement der Schnapparm an der Schnappkante einschnappt und eine Schnappverbindung ausbildet. Ferner können am Basiselement Klemmflanken vorgesehen sein, die an Umfangsflächen des Trägerelements angreifen und eine Klemmverbindung ausbilden. Alternativ kann das Trägerelement durch ein Verbindungsvorrichtung an den Einführelementen mit dem Basiselement verbindbar sein. Beispielsweise ist das Trägerelement zwischen zwei Einführelement einsetzbar, die auf dem Basiselement angeordnet sind und das Trägerelement zwischen sich einklemmen. Die Verbindungsvorrichtung kann lösbar ausgebildet sein, so dass das Trägerelement wieder von dem Basiselement abgenommen werden kann.

Die Verbindungsvorrichtung ermöglicht es, zunächst das Basiselement an einer Wandkonstruktion zu befestigen und das Trägerelement erst anschliessend daran anzubringen. Die erleichtert Transport und Montage eines Geräteträgers.

Die Variante einer Befestigung des Trägerelements am Basiselement oder dessen Einführelement mittels einer Verbindungsvorrichtung, weist einen erfinderischen Gedanken auf auch ohne, dass eine Längsfläche des wenigstens einen Einführelements, die zum Trägerelement führt, mit einer Längsachse des Trägerelements in Richtung des Gerätehalters einen stumpfen Winkel einschliesst. Es bleibt daher vorbehalten auf diesen Erfindungsgedanken einen eigenen unabhängigen Patentanspruch zu richten.

Nach einem weiteren Aspekt der vorliegenden Erfindung umfasst ein Geräteträger, der zur Befestigung eines Geräts an einer Gebäudewand zumindest teilweise in einer Gebäudewand angeordnet ist, ein Basiselement zur Befestigung innerhalb der Gebäudewand, wenigstens ein längliches Trägerelement, das mit einem Ende von dem Basiselement abragt, und einen Gerätehalter zur Aufnahme eines Geräts, der am anderen Ende des Trägerelements angeordnet ist. Ferner ist wenigstens eine Befestigungsfläche zur Befestigung des Gerätehalters am Trägerelement vorgesehen. Die Befestigungsfläche kann z. B. am Gerätehalter oder am Trägerelement vorgesehen sein. Der Gerätehalter ist von ausserhalb der Gebäudewand zugänglich. Die wenigstens eine Befestigungsfläche verläuft zumindest annähernd parallel zu einer seitlichen Umfangsfläche des Trägerelements und ist derart elastisch ausgebildet, dass sie im Wesentlichen senkrecht zur Umfangsfläche des Trägerelements auslenkbar ist. Weiter ist ein Klemmstück vorgesehen, das an der Befestigungsfläche angreift und eine Halteverbindung zwischen dem Trägerelement und dem Gerätehalter ausbildet. Die Befestigungsfläche kann somit durch ihre elastische Eigenschaft von der Umfangsfläche des Trägerelements weg oder zu dieser hin bewegt werden und somit von einer Haltestellung, in der eine Halteverbindung zum Trägerelement besteht, in eine Freigabestellung, in der der Gerätehalter von dem Trägerelement abgenommen oder entlang diesem verschoben werden kann, wechseln. Das Klemmstück ist vorgesehen, um die Befestigungsfläche in eine Haltestellung auszulenken und/oder die Befestigungsfläche in einer Haltestellung zu blockieren. Vorzugsweise greift das Klemmstück lösbar an der Befestigungsfläche an, d. h. es ist aus seiner Halte-, bzw. Klemmposition lösbar oder entnehmbar. Dabei ist das Klemmstück vorzugsweise parallel zur Längsachse des Trägerelements ausgerichtet und ist durch den Gerätehalter zugänglich, um in seine Halteposition gebracht oder gelöst zu werden. Hierfür kann im Gerätehalter eine Öffnung vorgesehen sein, durch das Klemmstück an der Befestigungsfläche angreifen kann.

Ein Geräteträger nach der vorliegenden Erfindung kann in einfacher Weise auf unterschiedliche bauliche Vorgaben einer Gebäudewand angepasst werden, indem der Gerätehalter schnell und einfach befestigt und abgenommen werden kann. Es können also verschiedene Arten von Gerätehaltern problemlos auf einem Trägerelement angebracht werden. Ferner kann das Trägerelement auf bestimmte Vorgaben angepasst werden und der Gerätehalter anschliessend daran befestigt werden. Ein langwieriges Festschrauben, wie es bei Gerätehaltern aus dem Stand der Technik bekannt ist, entfällt. Ferner kann auch nach dem Aufbringen eines Wandmaterials auf dem Basiselement und um Trägerelement das Klemmstück betätigt werden.

Nach einer Ausführungsform eines Geräteträgers nach der Erfindung ist das Klemmstück zwischen der Umfangsfläche des Trägerelements und der Befestigungsfläche vorgesehen. Sobald also das Klemmstück in seine Halteposition gebracht ist, wirkt die Rückstellkraft der durch das Klemmstück elastisch ausgelenkten Befestigungsfläche über das Klemmstück auf die Umfangsfläche und es entsteht ein Klemmsitz zwischen Gerätehalter und Trägerelement. Dabei kann beispielsweise der Gerätehalter formschlüssig auf das Trägerelement aufgesetzt sein und entlang der Längsachse auf diesem bis zu einem Anstoss verschoben werden. Durch das Klemmstück wird dann eine weitere Verschiebung blockiert. Der Formschluss kann z. B. realisiert werden, indem ein Vorsprung in Form einer Schürze innerhalb des Trägerelements an einer Innenfläche anliegt oder die Umfangsfläche des Trägerelements umgibt. Vorzugsweise liegen dabei der Vorsprung und die Umfangsfläche zumindest stellenweise passgenau an einander an. Ferner können in einem von Gerätehalter, bzw. Vorsprung, und Trägerelement eine Führungsnut vorgesehen sein, in der ein hervorstehendes Führungsstück am anderen von Gerätehalter, bzw. Vorsprung, und Trägerelement eingreift. Das Klemmstück kann in diesem Fall z. B. zwischen dem Führungsstück und der Führungsnut vorgesehen sein. Die Führungsnut und das Führungsstück können z. B. T-förmig ausgestaltet sein, so dass sich zwischen der Front des T-Balkens und der gegenüberliegenden Seite eine Halteverbindung herstellen lässt.

Dabei kann das Klemmstück zylindrisch ausgebildet sein und auf seinem Aussenumfang ein Aussengewinde aufweisen. Auf den dem Klemmstück gegenüber liegenden Flächen kann ein Innengewinde oder zumindest Innengewindesegmente vorgesehen sein, in die das Aussengewinde des Klemmstücks eingreifen kann. Grundsätzlich können aber auch die gegenüberliegenden Flächen aus derart weichem Material bestehen, dass sich das Aussengewinde zumindest teilweise in das Material einschneidet. Durch die Gewindeverbindung entsteht zusätzlich zum Reibschluss einer Klemmverbindung auch ein Formschluss zwischen dem Gerätehalter und dem Trägerelement.

Gemäss einer anderen Ausführungsform eines Geräteträgers nach der vorliegenden Erfindung kann das Klemmstück zwischen der Befestigungsfläche und einem gegenüber der Befestigungsfläche angeordneten Gegenstück oder einer Gegenfläche angeordnet sein. Ohne ein Klemmstück in einer Haltestellung kann die Befestigungsfläche in Richtung des Gegenstücks ausgelenkt werden. Sobald das Klemmstück eine Haltestellung einnimmt, wird eine solche Auslenkung blockiert und die Befestigungsfläche bildet eine Halteverbindung mit dem Trägerelement, bzw. dem Gerätehalter aus. Ein Gegenstück oder eine Gegenfläche ermöglicht eine flexible Ausgestaltung der Halteverbindung und eine einfach Handhabung des Klemmstücks.

In einer Variante ragt das Gegenstück oder die Gegenfläche im Wesentlichen parallel zur Befestigungsfläche vom Gerätehalter ab und verläuft zumindest annähernd parallel zur Umfangsfläche des Trägerelemenst. Zwischen Befestigungsfläche und Gegenstück, bzw. Gegenfläche, bildet sich somit ein Zwischenraum oder Schlitz aus, in den das Klemmstück eingesetzt werden kann. Vorzugsweise ist das Klemmstück in dem Zwischenraum in einem Passsitz angeordnet.

Das Klemmstück kann einen Absatz aufweisen, der in einer Haltestellung gegen eine Fläche des Gerätehalters anstösst. Ferner kann das Klemmstück innerhalb des Klemmsitzes, bzw. des Zwischenraums lösbar verrasten.

Weiter kann das Gegenstück selbst als elastische Fläche ausgebildet sein und z. B. eine zweite Befestigungsfläche gemäss der Erfindung bilden. Das zwischen den Flächen angeordnete Klemmstück klemmt zumindest eine der Flächen, vorzugsweise beide, in einen Klemmsitz mit dem Trägerelement. Beispielsweise können die Befestigungsfläche und die elastische Gegenfläche vom Gerätehalter abragen und jeweils gegenüber liegend an Innenumfangsflächen des Trägerelements anliegen. Die Flächen können dabei in der Umfangsfläche eines hülsenartigen Vorsprungs ausgebildet sein, der vom Gerätehalter abragt und in das Trägerelement einsetzbar ist. Das Klemmstück presst dann die elastischen Flächen des Vorsprungs gegen die Innenflächen des Trägerelements. Das Klemmstück kann in diesem Fall eine Öffnung des Trägerelements in Richtung des Gerätehalters verschliessen.

In einer alternativen Ausführungsform kann das Gegenstück am Trägerelement ausgebildet sein. Beispielsweise kann das Gegenstück von einer Gegenfläche gebildet werden, die auf einer Umfangsfläche des Trägerelements liegt.

In einer weiteren Ausführungsform eines Geräteträgers nach der vorliegenden Erfindung kann zwischen der Befestigungsfläche und der Fläche am Trägerelement oder Gerätehalter, mit der die Halteverbindung besteht, eine Eingriffsvorrichtung vorgesehen sein. Die Eingriffsvorrichtung unterstützt die Befestigung des Gerätehalters am Trägerelement und verhindert eine Bewegung des Gerätehalters entlang des Trägerelements und kann die Halteverbindung bilden oder zusätzlich zu einer Klemmverbindung vorgesehen sein. Die Rast-oder Eingriffsvorrichtung kann z. B. derart vorgesehen sein, dass die Umfangsfläche des Trägerelements eine Rasteinrichtung, wie etwa Rillen, eine Verzahnung, eine Reihe von Öffnungen oder dergleichen, und die Befestigungsfläche oder das Klemmstück eine Gegenrasteinrichtung, wie etwa Vorsprünge, eine Gegenverzahnung oder dergleichen aufweist. In einer Halteverbindung greifen die Rasteinrichtung und die Gegenrasteinrichtung formschlüssig in einander und bilden einen Rasteingriff, der eine Verschiebung zwischen Trägerelement und Gerätehalter entlang der Längsachse des Trägerelements blockiert. Bei Verwendung einer Eingriffsvorrichtung ist es ausreichend, wenn das Klemmstück in der Halteposition soweit ausgelenkt ist, dass ein Rasteingriff erfolgt. Eine reibschlüssige Klemmverbindung ist nicht zwingend erforderlich, da bereits der Rasteingriff eine Verschiebung blockiert.

In noch einer weiteren Ausführungsform eines Geräteträgers nach der vorliegenden Erfindung kann das Klemmstück z. B. zylindrisch ausgebildet sein und am Aussenumfang eine Klemmkulisse aufweisen. Die Klemmkulisse bildet in einer ersten Drehposition des Klemmstücks relativ zur Befestigungsfläche eine Klemmverbindung aus und in einer zweiten Drehposition ist die Klemmverbindung gelöst. Die Klemmkulisse kann beispielsweise durch eine in Längsrichtung des Klemmstücks hervorstehende Rippe gebildet werden, die in einer Klemmverbindung gegen die Befestigungsfläche drückt und in einer gelösten Stellung von der Befestigungsfläche weg gedreht ist. Dabei ist eine Vierteldrehung ausreichend, um die Klemmverbindung auszubilden oder zu lösen. Das Klemmstück kann dabei in einer Drehführung z. B. am Gerätehalter gehalten werden und muss zum Lösen des Klemmsitzes nicht von dem Gerätehalter entfernt werden.

Bei einer Variante eines Geräteträgers nach der vorliegenden Erfindung können zwei oder mehr Trägerelemente parallel zueinander von dem Basiselement abragen, die von einander beabstandet sind. Ein Gerätehalter kann auf einem Ende der Trägerelemente angeordnet werden. Vorzugsweise wird der Gerätehalter zwischen den zwei oder mehr Trägerelementen angeordnet, wobei der Gerätehalter entlang der Trägerelemente in einen gewünschten Abstand zum Basiselement entlang der Trägerelemente verschoben werden kann. Dabei ist es vorteilhaft, wenn die Trägerelemente zumindest an zwei sich gegenüberliegenden Seiten an einem Gerätehalter angreifen. Die Trägerelemente können z. B. als flache Trägerplatten ausgebildet sein, die eine breite Anlagefläche für einen Gerätehalter, beispielsweise eine Gerätedose, bieten.

Zwischen den Trägerelementen und dem Gerätehalter können Führungen vorgesehen sein, mit welchen der Gerätehalter an den Trägerelementen gehalten wird und entlang welchen er an den Trägerelementen verschoben werden kann. Eine Führung kann beispielsweise durch einen oder mehrere in Längsrichtung eines Trägerelements verlaufende Vorsprünge oder eine Kante an einem von Trägerelement und Gerätehalter und ein oder mehrere den

Vorsprung oder die Kante umfassendes Winkelstücke am anderen von Trägerelement und Gerätehalter vorgesehen sein. Es kann aber auch eine einfach Nut oder mehrere Nuten in der Trägerplatte in Längsrichtung vorgesehen sein, in die ein Vorsprung oder Stift am Gerätehalter eingreift.

Die zwei oder mehr Trägerelemente bilden eine stabile Halterung für den Gerätehalter auf dem Basiselement. In Form von Trägerplatten erleichtern sie das Anbringen von Wandmaterial über dem Basiselement, da sie nur eine schmale Fläche beanspruchen. Beispielsweise muss ein Dämmmaterial nur eingeschlitzt werden, so dass eine Trägerplatte in dem Schlitz Platz findet. Es ist nicht erforderlich, grössere Flächen aus dem Dämmmaterial aus zu schneiden.

Die Variante eines Geräteträgers mit zwei oder mehr Trägerelementen weist einen erfinderischen Gedanken auf, auch ohne dass eine Befestigungsfläche und ein zugehöriges Klemmstück zur Befestigung des Gerätehalters an den Trägerelementen oder ein Einführelement, wie vorher beschrieben, vorgesehen ist. Es bleibt daher vorbehalten auf diesen Erfindungsgedanken einen eigenen unabhängigen Patentanspruch zu richten.

Bei einer Ausführungsform eines Geräteträgers mit zwei oder mehr Trägerelementen können jedoch für zwei gegenüberliegende Trägerelemente jeweils eine Befestigungsfläche vorgesehen sein, wie oben beschrieben wurde. Grundsätzlich ist aber auch nur eine Befestigungsfläche mit einem zugehörigen Klemmstück ausreichend, um den Gerätehalter an dem Trägerelementen zu fixieren.

Die Befestigungsfläche kann von dem Gerätehalter parallel zu einer Trägerplatte abragen. Alternativ kann eine Befestigungsfläche an einer Trägerplatte ausgebildet sein, beispielsweise aus dieser ausgeformt sein. Die Trägerplatte kann auch das Gegenstück, respektive eine Gegenfläche, für die Halteverbindung bilden. Weitere Ausgestaltungen sind denkbar.

### KURZE BESCHREIBUNG DER ZEICHNUNGEN

Bevorzugte Ausführungsformen der Erfindung werden im Folgenden anhand der Zeichnungen dargestellt, die lediglich zur Erläuterung dienen und nicht einschränkend auszulegen sind. Aus den Zeichnungen offenbar werdende Merkmale der Erfindung sollen einzeln und in jeder Kombination als zur Offenbarung der Erfindung gehörend betrachtet werden. In den Zeichnungen zeigen:
- Fig. 1:: drei-dimensionale Darstellung einer ersten Ausführungsform eines Geräteträgers mit Einführelementen,
- Fig. 2:: Längsschnitt durch einen Geräteträger nach Figur 1,
- Fig. 3:: Aufsicht auf ein Basiselement eines Geräteträgers nach Figur 1,
- Fig. 4:: Detailansicht eines Einführelements des Geräteträgers nach Figur 1 mit Leerrohr,
- Fig. 5:: drei-dimensionale Darstellung einer zweiten Ausführungsform eines Geräteträgers mit Einführelementen,
- Fig. 6a:: Detailansicht eines Einführelements des Geräteträgers nach Figur 4 ohne Leerrohr,
- Fig. 6b:: Detailansicht des Einführelements des Geräteträgers nach Figur 4 mit Leerrohr,
- Fig. 7:: drei-dimensionale Darstellung einer dritten Ausführungsform eines Geräteträgers mit einer Befestigungsfläche und einem Klemmstück,
- Fig. 8a:: Detailansicht einer ersten Variante eines Geräteträgers nach Figur 7 als Längsschnitt mit einem Klemmstück in einer Löseposition,
- Fig. 8b:: Detailansicht der Variante nach Figur 8a als Längsschnitt mit dem Klemmstück in einer Halteposition,
- Fig. 9a:: Detailansicht einer zweiten Variante eines Geräteträgers nach Figur 7 als Längsschnitt mit einem Klemmstück in einer Löseposition,
- Fig. 9b:: Detailansicht der Variante nach Figur 9a als Längsschnitt mit dem Klemmstück in einer Halteposition,
- Fig. 10a:: Detailansicht einer dritten Variante eines Geräteträgers nach Figur 7 als Längsschnitt mit einem Klemmstück in einer Löseposition,
- Fig. 10b:: Detailansicht der Variante nach Figur 10a als Längsschnitt mit dem Klemmstück in einer Halteposition,
- Fig. 11a:: Detailansicht einer vierten Variante eines Geräteträgers nach Figur 7 als Längsschnitt mit einem Klemmstück in einer Löseposition,
- Fig. 11b:: Detailansicht der Variante nach Figur 11 a als Längsschnitt mit dem Klemmstück in einer Halteposition,
- Fig. 12a:: Detailansicht einer fünften Variante eines Geräteträgers nach Figur 7 als Längsschnitt mit einem Klemmstück in einer Löseposition,
- Fig. 12b:: Detailansicht der Variante nach Figur 12a als Längsschnitt mit dem Klemmstück in einer Halteposition,
- Fig. 13a:: Detailansicht einer sechsten Variante eines Geräteträgers nach Figur 7 als Längsschnitt mit einem Klemmstück in einer Löseposition,
- Fig. 13b:: drei-dimensionale Ansicht der Detailansicht aus Figur 13a,
- Fig. 14:: drei-dimensionale Darstellung einer dritten Ausführungsform eines Geräteträgers mit zwei Trägerelementen in einer ersten Variante,
- Fig. 15:: schematische Darstellung einer zweiten Variante eines Geräteträgers mit zwei Trägerelementen,
- Fig. 16a:: drei-dimensionale schematische Darstellung einer vierten Ausführungsform eines Geräteträgers mit einer Übergangstülle,
- Fig. 16b:: Detailansicht des Geräteträgers nach Figur 16a ohne Übergangstülle und
- Fig. 16c:: Detailansicht des Geräteträgers nach Figur 16a mit Übergangstülle.

In den Zeichnungen werden unterschiedliche Ausführungsformen und Varianten eines Geräteträgers nach der vorliegenden Erfindung gezeigt. Selbstverständlich sind die einzelnen Merkmale der gezeigten Geräteträger auch in anderen Kombinationen denkbar und sollen als zur Erfindung gehörend betrachtet werden.

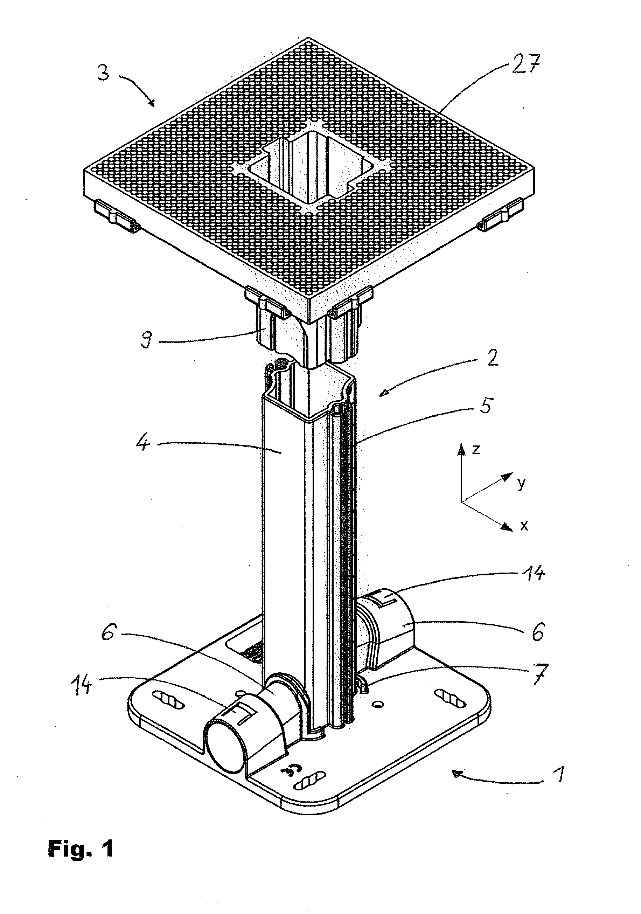

In Figur 1 ist eine erste Ausführungsform eines Geräteträgers nach der vorliegenden Erfindung mit einem Basiselement 1, einem länglichen Trägerelement 2 und einem Gerätehalter 3 gezeigt. Das Trägerelement 2 ragt im Wesentlichen senkrecht vom Basiselement 1 ab. Das Trägerelement 2 ist als hohles Bauelement ausgebildet und weist eine äussere Umfangsfläche 4 auf, die mehrere zu einander gewinkelt angeordnete Flächen umfasst. An wenigstens einer Seite weist die Umfangsfläche 4 eine in Längsrichtung verlaufende Führungsrille 5 auf, die annähernd T-förmig ausgebildet ist. In Richtung des Trägerelements 2 ragt von dem Gerätehalter 3 ein hülsenartiger Fortsatz 9 ab, der auf die Aussenumfangsform des Trägerelements 2 abgestimmt ist und über dieses aufgeschoben werden kann. Der Fortsatz 9 weist einen Führungsstift 16 auf, der nach innen ragt und in die Führungsrille 5 eingreifen kann. Das Trägerelement 2 wird vor dem Aufsetzen des Gerätehalters 3 zumindest annähernd auf eine erforderliche Länge gekürzt. Eine Feineinstellung der Gesamtlänge des Geräteträgers kann mittels einer teleskopartigen Verschiebung des Gerätehalters auf dem Trägerelement erfolgen. Der Gerätehalter kann in der gewünschten Stellung entlang der Längsrichtung auf dem Trägerelement befestigt werden, wie später ausführlich gezeigt wird. Auf dem Basiselement 1 sind zwei Einführkanäle 6 angeordnet, die an einander gegenüber liegenden Seiten des Trägerelements 2 an dieses angrenzen. Die Einführkanäle 6 sind einstückig mit dem Basiselement 1 ausgebildet.

Rund um das Trägerelement 2 verläuft auf der Oberfläche des Basiselements 1 und der Oberfläche der Einführkanäle 6 ein Vorsprung 7, der zwischen sich und der Umfangswand des Trägerelements 2 eine Halterinne 8 ausbildet. Wie in Figur 1 ersichtlich ist, kann der Vorsprung 7 unterbrochen um das Trägerelement 2 umlaufen, so dass auch die Halterille unterbrochen ausgebildet sein kann. Die Breite der Halterinne 8 entspricht im Wesentlichen der Dicke des hülsenartigen Fortsatzes 9. Der in Richtung des Basiselements 1 weisende Rand des Fortsatzes 9 ist entsprechend der Oberflächenstruktur des Basiselements mit den Einführkanälen ausgeschnitten. Sofern der Gerätehalter 3 auf dem Trägerelement 2 vollständig in Richtung des Basiselements aufgeschoben wird, bis der Rand des Fortsatzes 9 auf der Oberflächenstruktur anstösst, greift der Rand des Fortsatzes 9 in die Halterille 8 ein. Somit kann der Gerätehalter 3 in der Halterinne 8 gehalten und geführt werden.

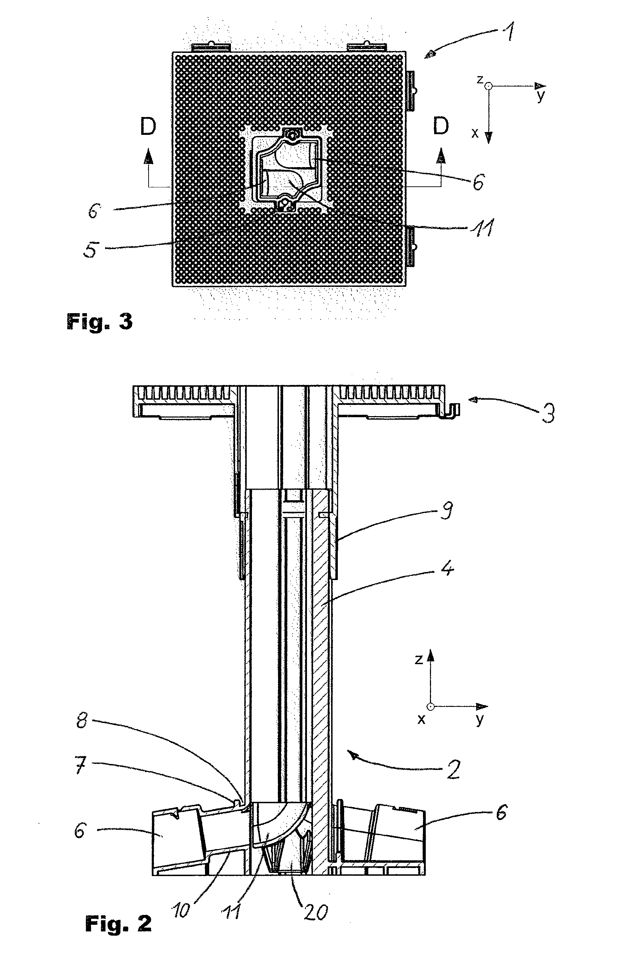

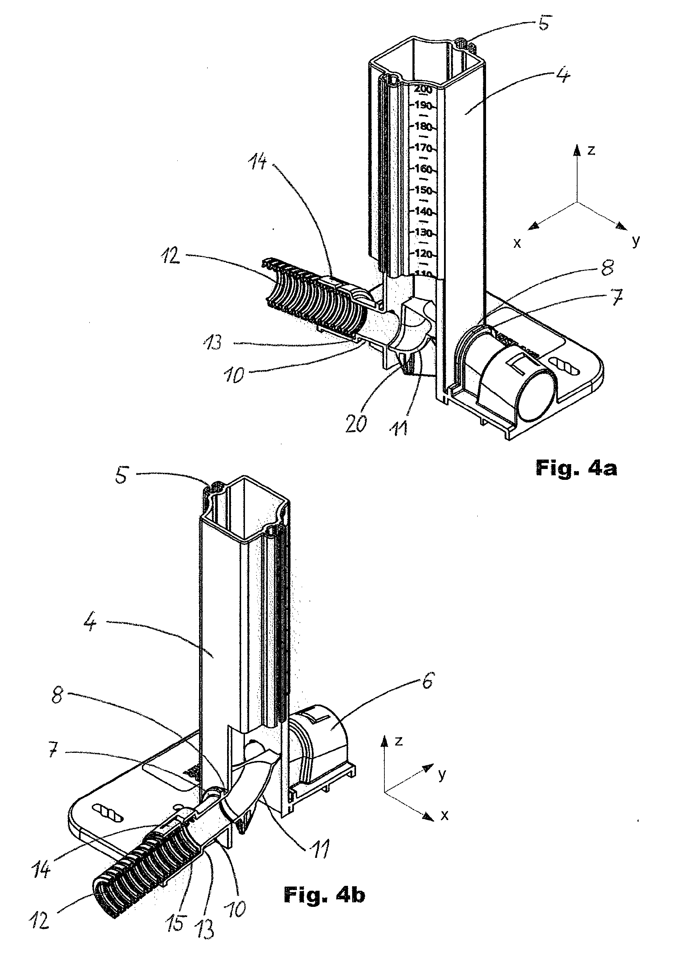

Wie in den Figur 2, 4a und 4b ersichtlich ist, weisen die Einführkanäle 6 eine Längsfläche 10 auf, die mit einer Längsachse des Trägerelements 2 in Richtung des Gerätehalters 3 einen stumpfen Winkel einschliesst. In der gezeigten Ausführungsform weist der Winkel zwischen der Längsfläche 10 und dem Trägerelement 2 ca. 100° auf.

Die Einführkanäle 6 münden in Öffnungen, bzw. Aussparungen, in der Umfangsfläche 4 des Trägerelements 2, so dass die Einführkanäle 6 in den Innenraum des Trägerelements hinein führen und die Längsflächen in den Innenraum weisen. Im Inneren des Trägerelements 2 ist den Ausgängen der Einführkanäle 6 gegenüberliegend ein Umlenkelement 11 angeordnet. Das Umlenkelement 11 umfasst eine gebogene Umlenkfläche, die aus der Richtung der Längsfläche 10 in Richtung der Längsachse des Trägerelements übergeht. Das Umlenkelement 11 weist im gezeigten Beispiel zwei Umlenkflächen auf, die jeweils einem der in entgegen gesetzte Richtungen verlaufenden Einführkanäle gegenüber liegen. Das Umlenkelement 11 kann durch eine Öffnung im Basiselement 1, über welcher das Trägerelement 2 angeordnet ist, aus dem Trägerelement entnommen werden. Vorzugsweise ist das Umlenkelement mittels Sollbruchstellen am Trägerelement 2 befestigt und kann aus diesem herausgebrochen werden. Wird das Umlenkelement 11 aus dem Trägerelement 2 entnommen ergibt sich ein Durchgang durch das Basiselement 1 in das Trägerelement 2.

In den Figuren 4a und 4b ist ein Einführkanal 6 im Detail von verschiedenen Ansichten gezeigt. An einem Ende des Einführkanals 6 ist ein Führungsrohr in Form eines Leerrohrs 12 in den Kanal eingeschoben. Das Leerrohr endet vor einer Stufe 13, an der sich der Radius des

Einführkanals verringert. Somit ergibt sich ein gerader Übergang vom Radius des Leerrohrs 12 zur Längsfläche 10 des Innenumfangs des Einführkanals 6. Das Leerrohr 12 ist mit einer Riffelung versehen, die Vertiefungen am Aussenumfang des Leerrohrs umfasst. Im Einführkanal 6 ist in der Umfangswand ein elastischer Schnapparm 14 mit einer nach innen ragenden Nase 15 ausgebildet. Der Schnapparm 14 ist entgegen seiner Elastizitätskraft radial nach aussen biegsam. Beim Einschieben eines Leerrohrs 12 wird der Schnapparm 14 durch die Riffelung ausgelenkt. In einer Endposition kann die Nase 15 des Schnapparms 14 in eine Vertiefung der Riffelung eingreifen und das Leerrohr gegen Zug in Richtung der Längsachse des Einführkanals 6 sichern.

Wie aus Figur 3 hervorgeht, sind die sich gegenüber liegenden Einführkanäle 6 nicht auf einer Linie, sondern versetzt zu einander angeordnet. Die Längsachsen der Einführkanäle schneiden sich daher nicht.

Um ein elektrisches Gerät mit Hilfe eines Geräteträgers nach der vorliegenden Erfindung an einer Wand zu montieren, wird das Basiselement 1 auf einer inneren Wandkonstruktion befestigt. Das Trägerelement 2 kann bereits auf dem Basiselement 1 sein oder es kann nach dem Befestigen an der Wand auf das Basiselement 1 aufgesetzt werden. Anschliessend wird der Gerätehalter 3 in einem gewünschten Abstand zum Basiselement 1 auf dem Trägerelement 2 befestigt. Der Gerätehalter 3 kann auch schon am Trägerelement 2 angebracht sein. Weiter können die Leerrohre 12 in die Einführkanäle 6 eingeschoben werden. Zur Bereitstellung eines elektrischen Kabels (nicht gezeigt) für das elektrische Gerät, das auf dem Gerätehalter 3 montiert wird, wird ein Kabel in das Leerrohr 12 eingeschoben. Das Leerrohr 12 verläuft in der Regel zunächst parallel zur Wandkonstruktion. Sobald das Kabel aus dem Leerrohr austritt, wird es entlang der Längsfläche 10 in einem stumpfen Winkel zur Längsachse des Trägerelements 2 in dieses eingeführt. Wenn das Kabel aus dem Einführkanal 6 austritt, wird es entlang der Umlenkfläche des Umlenkelements 11 in Richtung des Gerätehalters 3 geführt. Auch ohne Umlenkelement wird das Kabel auf Grund des stumpfen Winkels zwischen Längsfläche 10 und Trägerelement 2 zuverlässig in Richtung des Gerätehalters 3 gelenkt, sobald es gegen eine Innenseite des Trägerelements stösst und an dieser abgleitet. Die Umlenkflächen können diese Umlenkung zusätzlich unterstützen. Zudem kann das Umlenkelement die von entgegen gesetzten Seiten in das Trägerelement eingeführten Kabel an einander vorbei lenken.

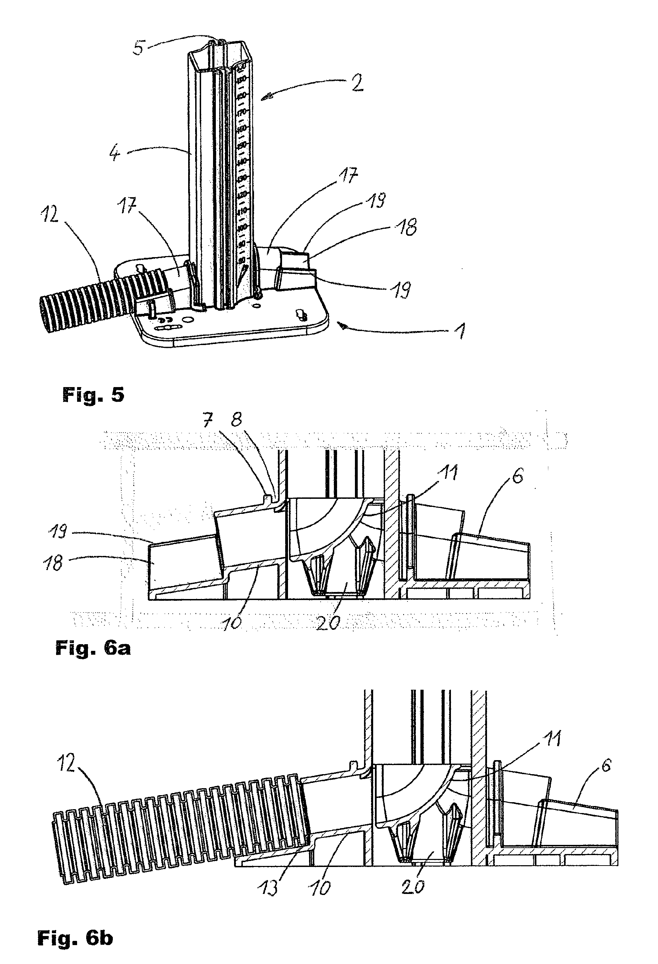

In den Figur 5 und 6a/6b ist eine weitere Ausführungsform eines Geräteträgers mit einer Befestigungseinrichtung für ein Leerrohr 12 an der Längsfläche 10 gezeigt. In dieser Variante weist der Einführkanal 17 einen Befestigungsbereich 18 auf, der nach oben in Richtung des Gerätehalters teilweise offen ist, so dass sich zwei gegenüberliegende Ränder 19 ergeben, die in Längsrichtung der Längsfläche 10 ausgebildet sind. Die Öffnung zwischen den Rändern 19 ist derart gross, dass ein Leerrohr 12 durch die Öffnung in den Einführkanal 17 eingedrückt werden kann. Dabei kann das Leerrohr kurzzeitig elastisch nachgeben und schnappt in einen Passsitz im Befestigungsbereich 18, so dass es dort sicher gehalten wird. Das Leerrohr liegt auf der Längsfläche auf, bzw. schliesst sich nach der Stufe 13 an diese an.

Ferner kann den Figuren 6a und 6b entnommen werden, wie die Längsfläche 10 in Richtung des Inneren des Trägerelements 2 weist. Im Inneren ist das Umlenkelement 11 angeordnet, dessen Umlenkfläche sich an die Längsfläche 10 anschliesst. Wie erwähnt, kann das Umlenkelement aus dem Trägerelement 2 entnommen werden. Hierfür kann es z. B. durch die Öffnung im Basiselement 1 an einem Griff 20 ergriffen werden.

An einer Aussenfläche kann das Trägerelement 2 eine Längenskala aufweisen, welche die Entfernung bis zum Basiselement 1 anzeigt. Das Trägerelement kann an Hand der Längenskala auf eine gewünschte Länge abgeschnitten werden. Die kantige Form des Aussenumfangs des Trägerelements 2 kann einer Verdrehsicherung des Gerätehalter auf dem Trägerelement dienen.

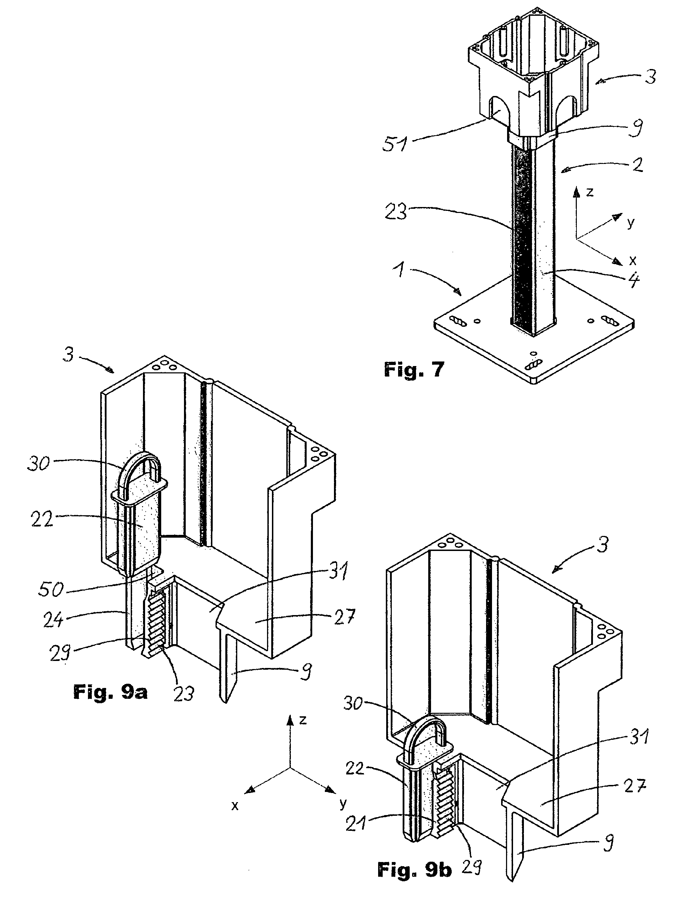

In Figur 7 ist eine weitere Ausführungsform eines Geräteträgers nach der Erfindung gezeigt, die kein Einführelement für ein Kabel, wie oben beschrieben aufweist. Grundsätzlich kann aber auch diese Ausführungsform mit einem solchen Einführelement ausgebildet sein. Der Geräteträger weist eine Befestigungsfläche 21 und ein Klemmstück 22 auf, die im Weiteren beschrieben werden. Der Geräteträger weist ein Trägerelement 2 mit einem Basiselement 1 an einem Ende und einem Gerätehalter 3 am anderen Ende auf. An einer Seite des Trägerelements 2 ist in Längsrichtung ein Raster 23 mit einer quer zur Längsrichtung verlaufenden Rastverzahnung vorgesehen. Der Gerätehalter 3 ist als Gerätedose ausgebildet. Von dem Gerätehalter 3 ragt nach unten in Richtung des Trägerelements 2 ein Fortsatz 9 ab, der das andere Ende des Geräteträges 2 umgibt. Die Befestigungsfläche 21 und das Klemmstück 22 sind in dieser Variante im Wesentlichen innerhalb des Fortsatzes 9 vorgesehen.

Alternativ zu einem Einführelement, wie oben beschrieben, kann der Gerätehalter in seiner Umfangsfläche eine Kabeleinführung, bzw. eine Einführung für ein Führungsrohr, aufweisen. Die Einführung kann z. B. als eine Sollbruchstelle vorgesehen sein, mit der ein Bereich der Umfangsfläche herausgebrochen werden kann, so dass sich eine Öffnung in der Umfangsfläche ergibt, durch die ein Kabel oder ein Führungsrohr in den Gerätehalter eingeführt werden kann. Der Gerätehalter 3 kann auch einen elastischen Bereich 51 aufweisen, der eine Öffnung umfasst, die durch elastisch verformbares Material bedeckt ist. Der elastische Bereich kann derart verformt, bzw. aufgebogen werden, dass ein Kabel oder ein Führungsrohr in den Gerätehalter eingeführt werden kann. Sobald ein Kabel oder ein Führungsrohr gegen den elastischen Bereich 51, bzw. das verformbare Material gestossen wird, öffnet sich die Öffnung. Das elastische Material kann z. B. durch eine gummielastische Membran gegeben sein. Die Membran kann z. B. mittig einen Durchgang aufweisen, der in unverformtem Zustand der Membran geschlossen ist. Durch Druck auf die Membran weitet sich der Durchgang auf. Wird etwa ein Führungsrohr mit einer Riffelung an der Aussenseite durch den Durchgang gestossen, kann die Membran durch ihre Elastizität in die Riffelung eingreifen und dient somit als Halteeinrichtung zum Halten des Führungsrohrs. Ein Zurückziehen des Führungsrohr wird durch die nach innen ausgelenkte Membran erschwert. Ein Geräteträger mit einem solchen elastischen Bereich 51 kann z. B. als Zwei-Komponenten-Bauteil hergestellt werden. Ein solcher elastischer Bereich 51 hat den Vorteil, dass es sich in einfacher Weise verschiedenen Aussenformen eines Kabels oder eines Führungsrohrs anpasst. Es können mehrere solcher elastischen Bereiche 51 an einem Geräteträger vorgesehen sein.

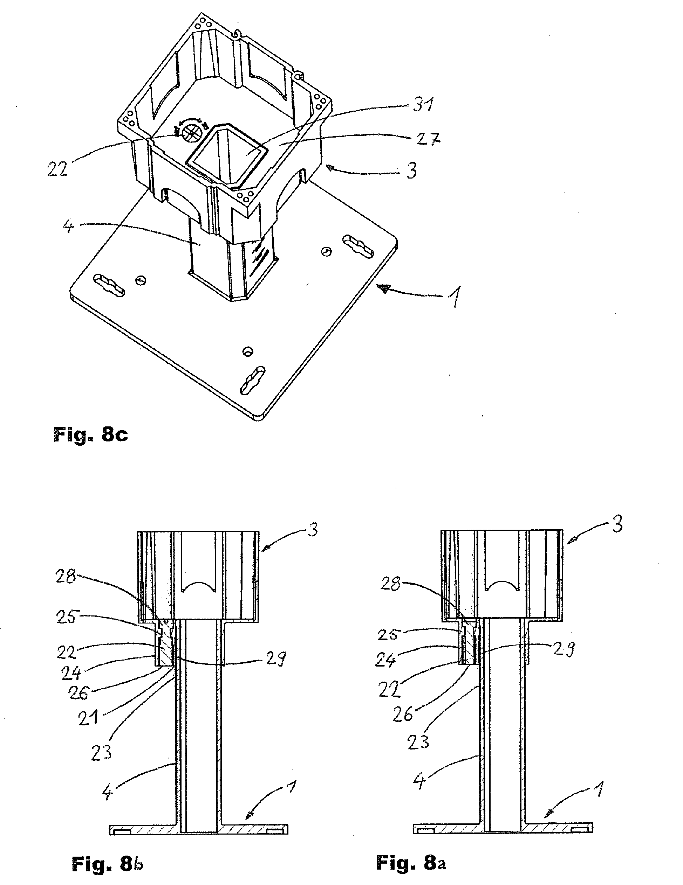

In den Figuren 8a, 8b und 8c ist eine erste Variante eines Geräteträgers mit einer Befestigungsfläche 21 und einem Klemmstück 22 gezeigt. Die Befestigungsfläche 21 ragt parallel zur Umfangsfläche 4 des Trägerelements 2 vom Gerätehalter 3 in Richtung des Basiselements 1 ab. Parallel zur Befestigungsfläche 21 ist ein Gegenstück mit einer Gegenfläche 24 vorgesehen, die ebenfalls vom Gerätehalter 3 abragt. Die Gegenfläche 24 kann z. B. von der Wand des Fortsatzes 9 gebildet werden. Zwischen Befestigungsfläche 21 und Gegenfläche 24 besteht ein Zwischenraum oder Schlitz, in dem das Klemmstück 22 in einer Führung 25 gelagert ist. Das Klemmstück 22 ist als länglicher Bolzen ausgebildet, der innerhalb der Führung 25 drehbar gehalten wird. Das Klemmstück 22 weist zwei Absätze 26 auf, die in Längsrichtung am Aussenumfang des Klemmstücks 22 verlaufen und in entgegen gesetzte Richtungen weisen. Das Klemmstück 22 wird durch eine Öffnung 50 im Boden 27 des Gerätehalters 3 hindurch zwischen die Befestigungsfläche 21 und die Gegenfläche 24 eingeführt, wobei ein Kopf 28 des Klemmstücks zugänglich bleibt, auch wenn Wandmaterial um den Gerätehalter angebracht wurde. Der Kopf 28 weist einen Schlitz auf, so dass er mit einem Schraubendreher in der Führung 25 gedreht werden kann. Vorteilhafter Weise ist der Kopf 28 im Boden 27 des Gerätehalters versenkt angeordnet. Die Befestigungsfläche 21 verläuft als elastisch biegsamer Arm parallel zur Umfangsfläche 4 mit dem Raster 23. Auf der der Umfangsfläche 4 zugewandten Seite weist die Befestigungsfläche 21 ein Gegenraster 29 auf, das mit dem Raster 23 zusammen wirken kann.

In einer Ausgangsstellung ohne Halteverbindung zwischen Gerätehalter 3 und Trägerelement 2 verläuft die Befestigungsfläche parallel zur Umfangsfläche 4, ohne dass die Befestigungsfläche ausgelenkt ist und das Raster 23 und das Gegenraster 29 in einander greifen. Dies ist eine Löseposition, wie in Figur 8a dargestellt, in der der Gerätehalter vom Trägerelement gelöst werden kann. Dabei ist das Klemmstück 22 in einer ersten Drehposition, in der der Absatz 26 von der Befestigungsfläche 21 entfernt ist, wie in Figur 8a ersichtlich ist. Zur Herstellung einer Halteverbindung zwischen Gerätehalter 3 und Trägerelement 2 wird das Klemmstück 22 in der Führung 25 gedreht bis ein erster Absatz 26 gegen die Befestigungsfläche 21 drückt und diese in Richtung der Umfangsfläche 4 des Trägerelements 2 auslenkt. Der gegenüberliegende zweite Absatz 26 greift an der Gegenfläche 24 an, so dass das Klemmstück 22 zwischen der Gegenfläche 24 und der Befestigungsfläche 21 klemmt und die Befestigungsfläche 21 elastisch auslenkt, wie in Figur 8b ersichtlich ist. Dies ist die Halteposition, in der der Gerätehalter 3 am Trägerelement 2 gehalten wird. Dabei greift das Gegenraster 29 in das Raster 23 und blockiert eine Bewegung des Gerätehalters 3 in Längsrichtung des Trägerelements 2. Die Halteverbindung setzt sich in dieser Ausführungsform aus einer kraftschlüssigen und einer formschlüssigen Verbindung zusammen. Die Absätze 26 bilden am Aussenumfang des Klemmstücks 22 eine Klemmkulisse aus, die durch Drehung des Klemmstücks zwischen einer Halteposition und einer gelösten Position wechseln kann.

In dieser Variante weist der Boden 27 des Gerätehalters 3 eine Öffnung 31 auf, durch die das Trägerelement 2 hindurch treten kann. Wie in den Figuren 8a und 8b ersichtlich, schliesst der Rand des Trägerelements 2 mit der Bodenfläche des Bodens 27 des Gerätehalters 3 ab. Durch die Halteverbindung ist der Gerätehalter in dieser Stellung, d. h. in diesem Abstand zum Basiselement 1 gesichert.

In den Figuren 9a und 9b ist eine weitere Variante eines Geräteträgers mit Befestigungsfläche 21 und Klemmstück 22 gezeigt, bei der das Klemmstück 22 durch einen in Längsrichtung zum Trägerelement 2 beweglichen Bolzen gebildet wird. Der Bolzen weist einen viereckigen Umfang und einen oben aus dem Boden 27 des Gerätehalters 3 hervorstehenden Haken 30 auf. In Figur 9a ist die Befestigungsfläche 21 in einer gelösten Stellung gezeigt, in der sie entspannt ist und ein Gegenraster 29 nicht in das Raster 23 der Umfangsfläche 4 des Trägerelements eingreift. Aus Gründen der Übersichtlichkeit ist Umfangsfläche 4 nicht gezeigt. Das Klemmstück 22 ist nach oben aus dem Zwischenraum zwischen der Befestigungsfläche 21 und der Gegenfläche 24 herausgezogen. In Figur 9b ist das Klemmstück 22 in den Zwischenraum eingeschoben, wobei sich eine Fläche des Bolzens an der Gegenfläche 24 abstützt und eine gegenüber liegende Fläche gegen die Befestigungsfläche 21 drückt und diese in Richtung der Umfangsfläche 4 auslenkt, wie in Figur 9b gezeigt ist. Dies entspricht wiederum einer Halteposition des Klemmstücks 22. Dabei wird das Gegenraster 29 in das Raster 23 der Umfangsfläche 4 gepresst, so dass sich eine Halteverbindung zwischen Gerätehalter 3 und Trägerelement 2 ergibt. Ein Verdrehen des Klemmstücks 22 ist auf Grund der auf einander liegenden Flächen von Klemmstück, Befestigungsfläche und Gegenfläche nicht möglich.

In dieser Variante weist die Öffnung 21 des Bodens 27 des Gerätehalters 3 einen kleineren Durchmesser als der Umfang des Trägerelements 2 auf. Wird der Gerätehalter 3 mit seinem Fortsatz 9 auf das Trägerelement 2 aufgesetzt, kann er so lange aufgeschoben werden, bis ein Absatz 32 am Boden 27 gegen den Rand des Trägerelements 2 stösst, so dass ein weiteres Aufschieben blockiert ist. In dieser Position oder einer Position mit einem Abstand zwischen dem Absatz 32 und dem Rand des Trägerelements kann durch das Klemmstück 22 eine Halteverbindung hergestellt werden. Somit kann eine Feineinstellung des Abstands zwischen Basiselement 1 und Gerätehalter 3 erfolgen.

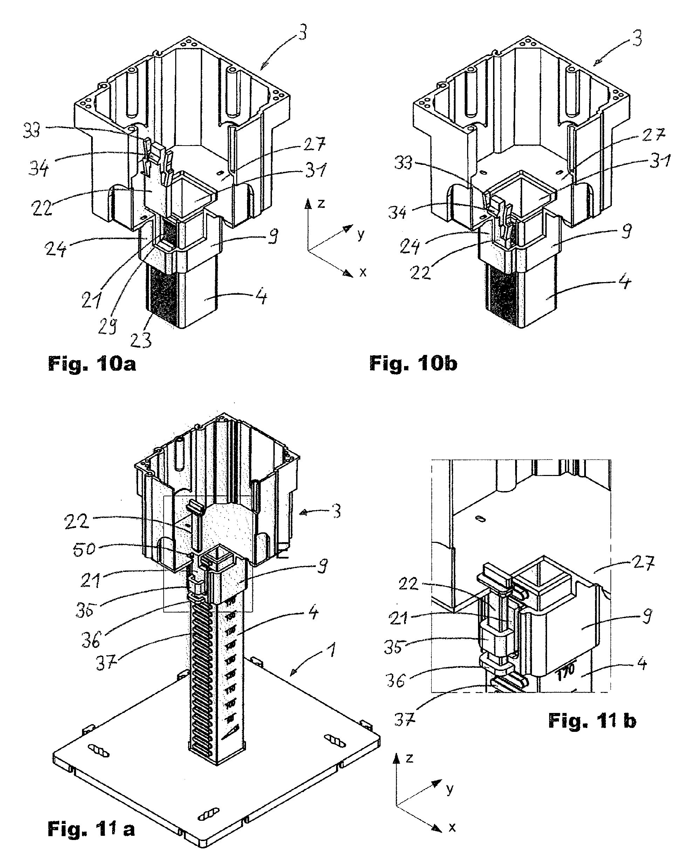

In den Figuren 10a und 10b ist eine weitere Variante eins Klemmstücks gezeigt, bei der das Klemmstück 22 Halteschnapper 33 und Anschlagkanten 34 aufweist. Das Klemmstück 22 ist als schmales Steckelement ausgebildet, das in den Zwischenraum zwischen der Befestigungsfläche 21 und der Gegenfläche 24 eingesetzt werden kann. Die Halteschnapper 33 sind an einem oberen Ende des Klemmstücks an den schmalen Seiten vorgesehen. Die Anschlagkanten 34 sind an den breiten Seiten ebenfalls am oberen Ende vorgesehen. Mit dem Klemmstück 22 kann eine Halteverbindung zwischen dem Gerätehalter 3 und dem Trägerelement 2 ausgebildet werden, die mit derjenigen der vorherigen Varianten vergleichbar ist. In der Haltestellung, wie in Figur 10b gezeigt, stossen die Anschlagkanten 34 am Boden 27 des Gerätehalters 3 an und die Halteschnapper 33 schnappen in einer Sicherungsposition im Zwischenraum zwischen Befestigungsfläche 21 und Gegenfläche 24 ein. Die Halteschnapper 33 ragen mit einem Ende aus dem Zwischenraum heraus, so dass sie zum Lösen der Sicherungsposition zusammen gedrückt und aus dem Zwischenraum entnommen werden können.

In den Figuren 11a und 11b ist noch eine weitere Variante eins Klemmstücks 22 mit einer zugehörigen Befestigungsfläche 21 gezeigt. Die Befestigungsfläche 21 ist im Fortsatz 9 vorgesehen und als elastisch auslenkbarer Arm aus diesem ausgeschnitten. Am Arm ist eine erste Brücke 35 und in Verlängerung des Arms ist eine zweite Brücke 36 an der Fläche des Fortsatzes 9, die den Arm umgibt, vorgesehen. Das Klemmstück 22 ist als Bolzen ausgebildet, der durch die Öffnung 50 im Boden 27 eingeführt wird. In eingesteckter Stellung durchragt das Klemmstück 22 die erste Brücke 35 und die zweite Brücke 36, so dass die Befestigungsfläche 21 relative zum Fortsatz 9 verriegelt ist, wie in Figur 11b ersichtlich ist.

An der Aussenseite der Umfangsfläche 4 des Trägerelements 2 ist ein Raster 23 mit einer Vielzahl von parallel zu einander verlaufenden Rippen 37 vorgesehen. An der dem Raster gegenüberliegenden Seite der Befestigungsfläche 21 sind ebenfalls Rastrippen vorgesehen, die zwischen die Rippen 37 eingreifen, sobald die Befestigungsfläche durch das Klemmstück 22 in Richtung des Trägerelements 2 ausgelenkt wird. Die Rastrippen gehen dabei mit den Rippen 37 eine formschlüssige Halteverbindung ein, so dass der Gerätehalter 3 nicht weiter auf dem Trägerelement verschoben werden kann. Eine reibschlüssige Verbindung ist in diesem Fall nicht erforderlich.

Der Boden 27 des Gerätehalters 3 ist in dieser Variante geschlossen. Somit kann das Trägerelement 2 in den Fortsatz 9 eingeschoben werden, bis der Rand des Trägerelements 2 am Boden 27 anstösst. Grundsätzlich kann eine Halteverbindung aber bereits erzeugt werden, wenn der Trägerhalter 3 nicht vollständig bis zum Anschlag am Trägerlement 2 aufgeschoben ist. Auf diese Weise kann wiederum eine Feineinstellung des Abstands zwischen Basiselement 1 und Gerätehalter 3 erfolgen und der Geräteträger auf verschiedene Dicken von Wandmaterial angepasst werden.

In den gezeigten Varianten ist jeweils ein Klemmstück vorgesehen. Grundsätzlich können aber auch weitere Klemmstück vorgesehen sein, die mit weiteren Befestigungsflächen zusammenwirken. Beispielsweise kann an einer einer ersten Befestigungsfläche gegenüber liegenden Seite eine weitere Befestigungsfläche an einem Trägerelement vorgesehen sein, so dass das Trägerelement zwei Halteverbindungen an zwei sich gegenüber liegenden Seiten der Umfangsfläche aufweist.

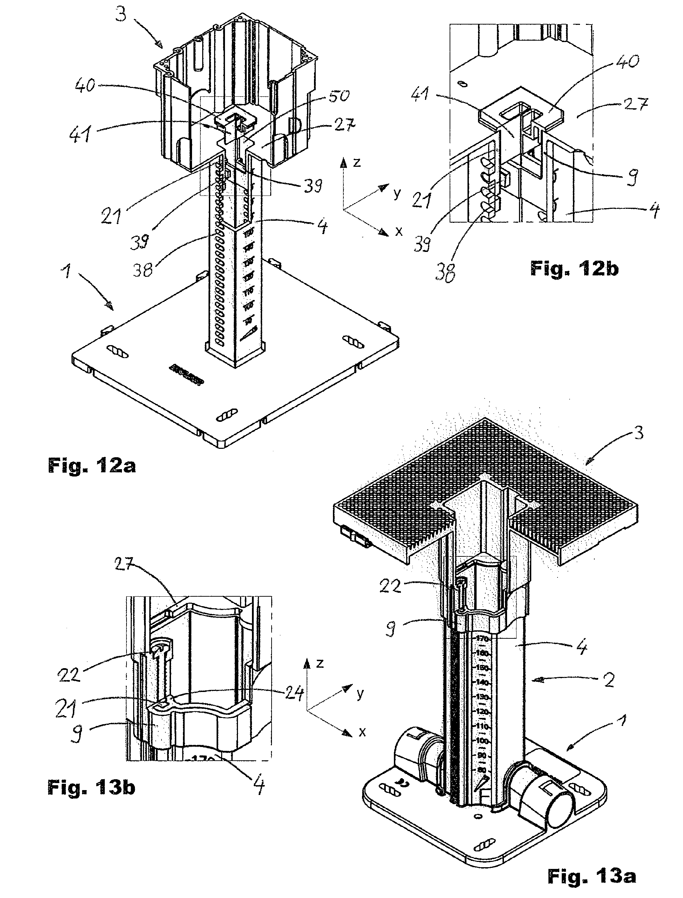

In den Figuren 12a und 12b ist eine weitere Variante eines Geräteträgers mit zwei Befestigungsflächen 21 gezeigt. Der Fortsatz 9 ragt wiederum vom Boden 27 des Gerätehalters in Richtung des Trägerelements 2 ab. Der Fortsatz 9 kann innerhalb des Trägerelements eingeschoben werden, so dass der Rand des Trägerelements 2 ausserhalb des Fortsatzes am Boden 27 anstossen kann. In der Umfangswand 4 des Trägerelements 2 sind an zwei einander gegenüber liegenden Flächen ein Raster 23 mit einer Vielzahl von Rastöffnungen 38 vorgesehen. Am Fortsatz 9 sind an zwei einander gegenüberliegenden Wänden elastisch auslenkbare Befestigungsflächen ausgebildet, an deren Aussenseite Rastrippen vorgesehen sind, welche in die Rastöffnnungen 38 eingreifen können. An den Innenseiten der Befestigungsflächen 21 sind Bügel 39 vorgesehen, an welchen die Befestigungsflächen 21 nach innen ausgelenkt werden können. Ein Klemmstück 22 ist als Verschluss für die Öffnung 31 im Boden 27 des Gerätehalters 3 ausgebildet und weist eine senkrecht von einer Verschlussfläche 40 abragende Klemmplatte 41 auf.

Wie in Figur 12a zu sehen ist, greifen die Rastrippen der Befestigungsflächen 21 in die Rastöffnungen 38, wenn diese in einem entspannten Zustand sind, wodurch sich eine Halteverbindung zwischen Trägerelement 2 und Gerätehalter 3 ergibt. Zum Einsetzen des Fortsatzes 9 mit den Befestigungsflächen 21 in das Trägerelement werden diese z. B. durch eine Zange an den Bügeln 39 erfasst und nach innen ausgelenkt. Der Gerätehalter kann dann in das Trägerelement 2 in eine gewünschte Rastposition eingesetzt werden. Anschliessend wird das Klemmelement 22 zwischen die Befestigungsflächen 21 eingesetzt, um diese in ihrer Rastposition zu blockieren und die Befestigung des Gerätehalters am Trägerelement zu sichern.

In den Figuren 13a und 13b ist noch eine weitere Variante eines Geräteträgers, bei der die Befestigungsfläche am Gerätehalter 3 vorgesehen ist und eine Gegenfläche 24 vom Aussenumfang 4 des Trägerelements 2 gebildet wird. Die Befestigungsfläche 21 ist an einem T-Balken eines Führungsstiftes 16 und die Gegenfläche im Inneren einer Führungsrille 5 vorgesehen. Die Befestigungsfläche 21 und die Gegenfläche 24 können jeweils Einbuchtungen aufweisen, die sich gegenseitig zu einem Zwischenraum zwischen den Flächen ergänzen. Das Klemmstück 22 ist durch eine einfache Schraube gegeben, die in den Zwischenraum eingeschraubt werden kann. Dabei wird die Befestigungsfläche elastisch ausgelenkt und es entsteht ein Klemmsitz zwischen Gerätehalter 3 und Trägerelement 2. Zusätzlich kann das Gewinde des Klemmstücks 22 in die Oberfläche der Befestigungsfläche 21 und der Gegenfläche 24 eingreifen und einen Formschluss ausbilden.

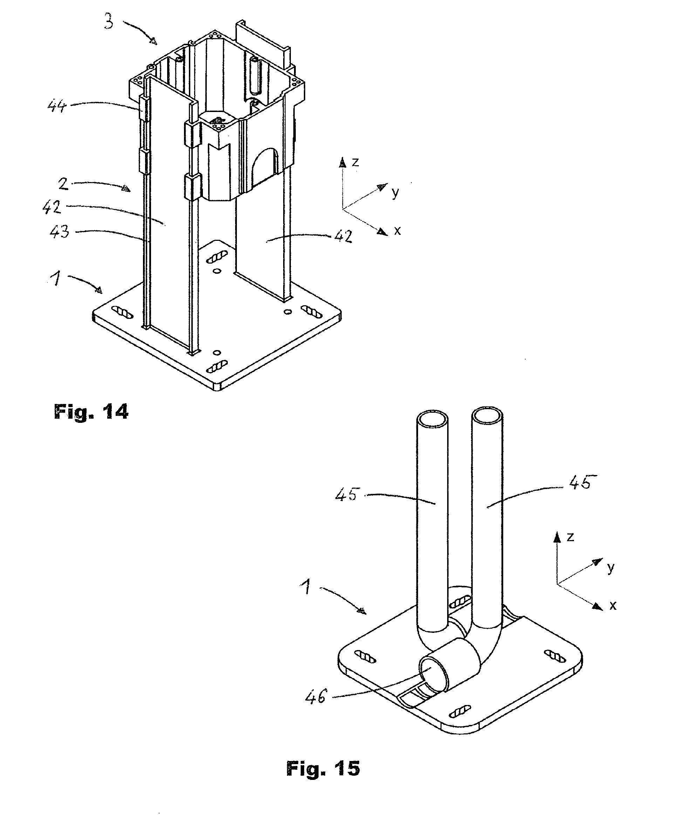

In Figur 14 ist ein Geräteträger nach einem weiteren Aspekt der vorliegenden Erfindung gezeigt. Der Geräteträger weist eine Basisplatte 1 auf, von der zwei parallel zu einander verlaufende Trägerelemente in Form von Trägerplatten 42 abragen. Die Trägerplatten 42 weisen eine breite Seite als Stützfläche für einen Gerätehalter 3 auf, der zwischen die Trägerplatten 42 eingesetzt ist. Die Trägerplatten weisen an ihren gegenüber liegenden Rändern eine Führungsleiste 43 in Längsrichtung der Trägerplatten auf. Am Gerätehalter 3 sind an den Trägerplatten gegenüber liegenden Seiten Greifer 44 vorgesehen, die die Führungsleisten 43 umfassen, so dass der Trägerhalter 3 in Längsrichtung an den Trägerplatten geführt wird. Der Trägerhalter 3 kann auf diese Weise an zwei Seiten sicher gehalten werden. An diesen beiden Seiten wird er über die gesamte Breite der Trägerplatten 42 abgestützt, da er mit den Greifern am Rand befestigt ist. Der Abstand zwischen dem Basiselement 1 und dem Trägerhalter 3 kann kontinuierlich eingestellt werden, indem der Trägerhalter 3 entlang den Führungsleisten verschoben wird.

Der Trägerhalter 3 kann durch eine der oben beschriebenen Varianten mit Befestigungsfläche und Klemmstück an den Trägerplatten gehalten werden. Beispielsweise kann eine Befestigungsfläche und ein Gegenstück an der Seitenwand des Geräteträgers 3 und der Fläche der Trägerplatten 42 vorgesehen werden. Es ist z. B. denkbar, dass eine elastisch auslenkbare Befestigungsfläche aus der Wand des Gerätehalters 3 oder der Fläche der Trägerplatten 42 ausgeformt wird.

In Figur 15 ist eine zweite Variante eines Geräteträgers mit zwei Trägerelementen schematisch dargestellt. Der Geräteträger weist zwei Trägerelemente in Form von Rohrelementen 45 auf, die im Wesentlichen parallel nebeneinander von dem Basiselement 1 abstehen, wobei ein unteres Ende am Basiselement 1 derart gebogen ist, dass es zumindest annähernd parallel zur Oberfläche des Basiselements 1 verläuft. Der untere Bereich ist beispielsweise um 90° gebogen. Vorzugsweise weist das untere Ende einen Bereich auf, der einen stumpfen Winkel zur Längsachse des Trägerelements 2 bildet, so dass sich eine Längsfläche ergibt, wie oben beschrieben. An den Bereich mit stumpfem Winkel kann sich ein weiterer gewinkelter Bereich anschliessen, so dass sich insgesamt ein rechter Winkel ergibt. Das untere Ende weist zudem eine Einführöffnung 46 auf, durch die ein Kabel in das Rohrelement eingeführt werden kann. Ein Kabel kann beispielsweise direkt in den Bereich mit stumpfem Winkel oder in den weiteren Bereich eingeführt werden. Die beiden Rohrelemente 45 sind derart auf dem Basiselement 1 angeordnet, dass die Einführöffnungen 46 in entgegen gesetzte Richtungen weisen. Der untere Bereich kann zudem Befestigungsmittel zum Befestigen von Leerrohren aufweisen. Am oberen Ende der Rohrelemente 45 kann ein Gerätehalter (nicht gezeigt) angebracht werden.

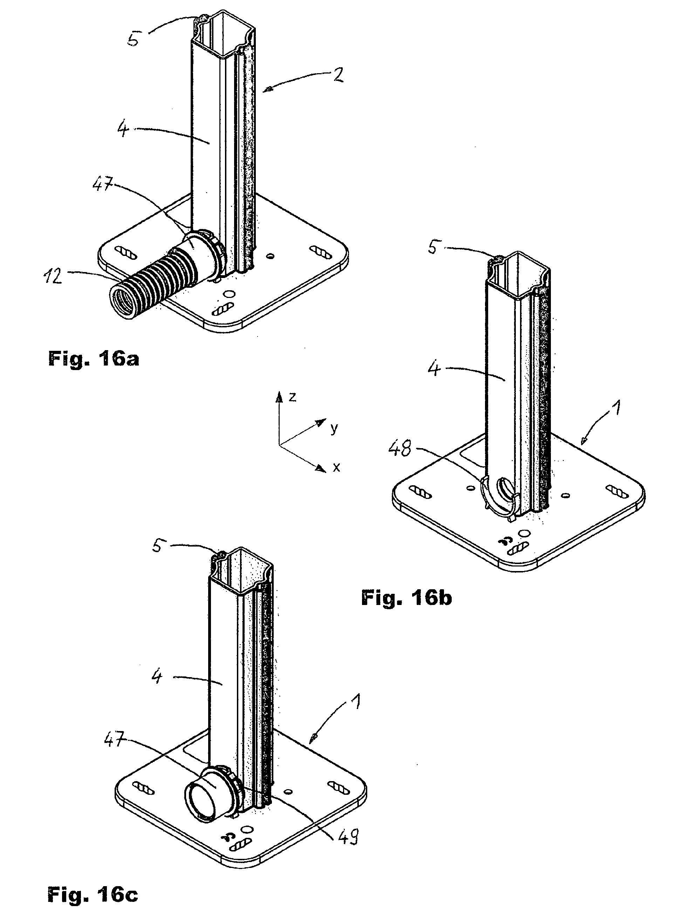

In den Figuren 16a bis 16c ist eine weitere Ausführungsform eines Geräteträgers nach der Erfindung mit einer Übergangstülle 47 zwischen einem Trägerelement 2 und einem Leerrohr 12 gezeigt. Wie in Figur 16a ersichtlich, wird ein Leerrohr 12 über die Übergangstülle 47 in ein unteres Ende des Trägerelements 2 eingeleitet. Zur Aufnahme der Übergangstülle 47 ist um die seitliche Öffnung im Trägerelement 2 eine Aufnahme 48 in Form eines Ringsegments vorgesehen, in welchem die Übergangstülle 47 eingelegt werden kann, wie in Figur 16b gezeigt ist. Die Übergangstülle 47 ist als Rohrelement ausgebildet und weist im Inneren Halteeinrichtungen zum Halten des Leerrohrs 12 auf. An einem Ende weist die Übergangstülle 47 eine am Aussenumfang umlaufende Ringnut 49 auf, mit der sie in die Aufnahme 48 eingesetzt werden kann, wie in Figur 16c gezeigt ist. Die Verbindung zwischen Ringnut 49 und Aufnahme 48 blockiert die Übergangstülle 47 gegen eine Zugkraft in axialer Richtung. Bei der Montage kann somit die Übergangstülle 47 bereits am Leerrohr angebracht werden, bevor sie an den Geräteträger montiert wird.

Vorzugsweise kann die Aufnahme 48 derart ausgestaltet sein, dass die Achse der Übergangstülle 47 mit der Achse des Trägerelements 2 einen stumpfen Winkel einschliesst. Eine Innenfläche der Übergangstülle 47 kann somit eine Längsfläche im Sinne der oben beschriebenen Erfindung bilden. Hierfür kann beispielsweise die Übergangstülle 47 mit einem schräg verlaufenden Ende am Trägerelement angebracht werden oder die Aufnahme 48 ordnet die Übergangstülle 47 schräg am Trägerelement 2 an.

Weitere Ausgestaltungen eines erfindungsgemässen Geräteträgers sind denkbar, insbesondere sind weitere Kombinationen der beschriebenen Merkmale denkbar, die gemeinsam eine Weiterentwicklung des Geräteträgers bilden.

### BEZUGSZEICHENLISTE

- 1: Basiselement
- 2: Trägerelement
- 3: Gerätehalter
- 4: Umfangsfläche
- 5: Führungsrille
- 6: Einführkanal
- 7: Vorsprung
- 8: Halterille
- 9: Fortsatz
- 10: Längsfläche
- 11: Umlenkelement
- 12: Leerrohr
- 13: Stufe
- 14: Schnapparm
- 15: Nase
- 16: Führungsstift
- 17: Einführkanal
- 18: Befestigungsbereich
- 19: Rand
- 20: Griff
- 21: Befestigungsfläche
- 22: Klemmstück
- 23: Raster
- 24: Gegenfläche
- 25: Führung
- 26: Absatz
- 27: Boden
- 28: Kopf
- 29: Gegenraster
- 30: Haken
- 31: Öffnung
- 32: Absatz
- 33: Halteschnapper
- 34: Anschlagkante
- 35: Brücke
- 36: Brücke
- 37: Rippe
- 38: Rastöffnung
- 39: Bügel
- 40: Verschlussfläche
- 41: Klemmplatte
- 42: Trägerplatte
- 43: Führungsleiste
- 44: Greifer
- 45: Rohrelement
- 46: Einführöffnung
- 47: Eingangstülle
- 48: Aufnahme
- 49: Ringnut
- 50: Zugangsöffnung
- 51: elastischer Bereich

## Patentansprüche

1. Geräteträger, der zur Befestigung eines Geräts an einer Gebäudewand zumindest teilweise in einer Gebäudewand angeordnet ist, umfassend:
- ein Basiselement (1) zur Befestigung innerhalb der Gebäudewand,
- wenigstens ein längliches Trägerelement (2), das mit einem Ende von dem Basiselement (1) abragt,
- einen von ausserhalb der Gebäudewand zugänglichen Gerätehalter (3) zur Aufnahme eines Geräts, der am anderen Ende des Trägerelements (2) angeordnet ist, und
- wenigstens eine Befestigungsfläche (21) am Gerätehalter oder Trägerelement zur Befestigung des Gerätehalters (3) am Trägerelement (2),
**dadurch gekennzeichnet, dass**
- die wenigstens eine Befestigungsfläche (21) zumindest annähernd parallel zu einer seitlichen Umfangsfläche (4) des Trägerelements (2) verläuft und derart elastisch ausgebildet ist, dass sie im Wesentlichen senkrecht zur Umfangsfläche (4) des Trägerelements (2) auslenkbar ist, und
- wenigstens ein Klemmstück (22) vorgesehen ist, das an der Befestigungsfläche (21) angreift und eine Halteverbindung zwischen dem Trägerelement (2) und dem Gerätehalter (3) ausbildet.

2. Geräteträger nach Anspruch 1, **dadurch gekennzeichnet, dass** das Klemmstück (22) lösbar an der Befestigungsfläche (21) angreift.

3. Geräteträger nach Anspruch 1 oder 2, **dadurch gekennzeichnet, dass** das Klemmstück (22) zwischen der Umfangsfläche (4) des Trägerelements (2) und der Befestigungsfläche (21) vorgesehen ist.

4. Geräteträger nach dem vorhergehenden Anspruch, **dadurch gekennzeichnet, dass** das Klemmstück (22) zylindrisch und mit einem Aussengewinde ausgebildet ist.

5. Geräteträger nach Anspruch 1 oder 2, **dadurch gekennzeichnet, dass** das Klemmstück (22) zwischen der Befestigungsfläche (21) und einem gegenüber der Befestigungsfläche angeordneten Gegenstück (24) angeordnet ist.

6. Geräteträger nach dem vorhergehenden Anspruch, **dadurch gekennzeichnet, dass** das Gegenstück (24) im Wesentlichen parallel zur Befestigungsfläche (21) vorgesehen ist.

7. Geräteträger nach einem der Ansprüche 5 oder 6, **dadurch gekennzeichnet, dass** das Gegenstück (24) als elastische Fläche ausgebildet ist.

8. Geräteträger nach einem der Ansprüche 5 bis 7, **dadurch gekennzeichnet, dass** das Gegenstück (24) am Trägerelement (2) oder am Gerätehalter (3) ausgebildet ist.

9. Geräteträger nach einem der vorhergehenden Ansprüche, **dadurch gekennzeichnet, dass** der Gerätehalter (3) verschieblich an dem Trägerelement (2) angeordnet ist.

10. Geräteträger nach einem der vorhergehenden Ansprüche, **dadurch gekennzeichnet, dass** die Umfangsfläche (4) des Trägerelements (2) eine Rasteinrichtung (23; 37) aufweist, in die eine Gegenrasteinrichtung (29; 38) an der Befestigungsfläche (21) oder an dem Klemmstück (22) in einer Halteverbindung formschlüssig eingreift.

11. Geräteträger nach einem der Ansprüche 1 bis 9, **dadurch gekennzeichnet, dass** das Klemmstück (22) zylindrisch ausgebildet ist und am Aussenumfang eine Klemmkulisse (26) aufweist, die in einer ersten Drehposition relativ zur Befestigungsfläche (21) eine Halteverbindung ausbildet und in einer zweiten Drehposition die Halteverbindung gelöst ist.

12. Geräteträger nach einem der vorhergehenden Ansprüche, **dadurch gekennzeichnet, dass** im Gerätehalter (3) eine Zugangsöffnung (50) zum Ansetzen des Klemmstücks (22) an der Befestigungsfläche (21) vorgesehen ist.

13. Geräteträger nach einem der vorhergehenden Ansprüche, **dadurch gekennzeichnet, dass** zwei oder mehr Trägerelemente (2) parallel zueinander von dem Basiselement (1) abragen und der Gerätehalter (3) zwischen den zwei oder mehr Trägerelementen (2) angeordnet ist.

14. Geräteträger nach Anspruch 13, **dadurch gekennzeichnet, dass** für zwei gegenüberliegende Trägerelemente (2) jeweils eine Befestigungsfläche vorgesehen ist.

15. Geräteträger nach einem der Ansprüche 13 oder 14, **dadurch gekennzeichnet, dass** die Trägerelemente als flache Trägerplatten (42) mit einer breiten Seite ausgebildet sind, an welchen der Gerätehalter (3) angeordnet ist.

16. Gerätehalter nach einem der vorhergehenden Ansprüche, **dadurch gekennzeichnet, dass** wenigstens ein elastischer Bereich (51) vorgesehen ist, der eine Öffnung umfasst, die durch elastisch verformbares Material bedeckt ist.

## Claims

1. A device carrier which, for fastening a device to a housing wall, is at least partially mounted in a housing wall, comprising:
- a base element (1) to be fastened within the housing wall,
- at least one elongate carrier element (2) protruding with one end from said base element (1),
- a device holder (3) accessible from outside of the housing wall for receiving a device, which holder is mounted to the other end of said carrier element (2), and
- at least one fastening surface (21) on said device holder or carrier element for fastening said device holder (3) to said carrier element (2),
**characterized in that**
- the at least one fastening surface (21) extends at least approximately parallel to a lateral circumferential surface (4) of said carrier element (2) and is formed to be elastic in such a way that it can be deflected substantially perpendicularly to the circumferential surface (4) of said carrier element (2), and
- at least one clamping piece (22) is provided, which engages on said fastening surface (21) and forms a holding connection between said carrier element (2) and said device holder (3).

2. The device carrier as claimed in claim 1, **characterized in that** said clamping piece (22) detachably engages on the fastening surface (21).

3. The device carrier as claimed in claim 1 or 2, **characterized in that** said clamping piece (22) is provided between said circumferential surface (4) of said carrier element (2) and said fastening surface (21).

4. The device carrier as claimed in the preceding claim, **characterized in that** said clamping piece (22) is formed to be cylindrical and with an external thread.

5. The device carrier as claimed in claim 1 or 2, **characterized in that** said clamping piece (22) is provided between said fastening surface (21) and a counter piece (24) disposed opposite said fastening surface.

6. The device carrier as claimed in the preceding claim, **characterized in that** said counter piece (24) is provided substantially parallel to said fastening surface (21).

7. The device carrier as claimed in claim 5 or 6, **characterized in that** said counter piece (24) is formed as an elastic surface.

8. The device carrier as claimed in any one of claims 5 to 7, **characterized in that** said counter piece (24) is formed on said carrier element (2) or on said device holder (3).

9. The device carrier as claimed in any one of the preceding claims, **characterized in that** said device holder (3) is displaceably provided on said carrier element (2).

10. The device carrier as claimed in any one of the preceding claims, **characterized in that** the circumferential surface (4) of said carrier element (2) has latching means (23; 37) which are engaged in a form-locking manner in a holding connection by counter latching means (29; 38) on said fastening surface (21) or on said clamping piece (22).

11. The device carrier as claimed in any one of claims 1 to 9, **characterized in that** said clamping piece (22) is formed to be cylindrical and has a clamping link (26) that forms a holding connection in a first rotary position relative to said fastening surface (21) and that is released in a second rotary position of the holding connection.

12. The device carrier as claimed in any one of the preceding claims, **characterized in that** an access opening (50) for attaching said clamping piece (22) to said fastening surface (21) is provided in said device holder (3).

13. The device carrier as claimed in any one of the preceding claims, **characterized in that** two or more carrier elements (2) protrude from said base element (1) parallel to each other, and said device holder (3) is provided between said two or more carrier elements (2).

14. The device carrier as claimed in claim 13, **characterized in that** one fastening surface each is provided for two opposite carrier elements (2).

15. The device carrier as claimed in claim 13 or 14, **characterized in that** the carrier elements are formed as flat carrier plates (42) with a broad side, on which said device carrier (3) is provided.

16. The device holder as claimed in any one of the preceding claims, **characterized in that** at least one elastic region (51) is provided which has an opening that is covered by elastically deformable material.

## Revendications

1. Support d'appareil agencé au moins partiellement dans un mur de bâtiment pour la fixation d'un appareil, comprenant :
- un élément de base (1) destiné à être fixé à l'intérieur du mur de bâtiment,
- au moins un élément de support (2) longitudinal faisant saillie avec une extrémité sur l'élément de base (1),
- un dispositif de maintien d'appareil (3) accessible depuis l'extérieur du mur de bâtiment, pour la réception d'un appareil agencé à l'autre extrémité de l'élément de support (2), et
- au moins une surface de fixation (21) sur le dispositif de maintien d'appareil ou sur l'élément de support, pour la fixation du dispositif de maintien d'appareil (3) sur l'élément de support (2),
**caractérisé en ce que**
- l'au moins une surface de fixation (21) s'étend au moins approximativement parallèlement à une surface périphérique (4) latérale de l'élément de support (2), tout en étant conçue élastique, de manière à pouvoir être déviée quasiment perpendiculairement à la surface périphérique (4) de l'élément de support (2), et
- **en ce qu'**il est prévu au moins une pièce de serrage (22) butant contre la surface de fixation (21) et formant un assemblage de maintien entre l'élément de support (2) et le dispositif de maintien d'appareil (3).

2. Support d'appareil selon la revendication 1, **caractérisé en ce que** la pièce de serrage (22) bute de façon détachable contre la surface de fixation (21).

3. Support d'appareil selon la revendication 1 ou 2, **caractérisé en ce que** la pièce de serrage (22) est prévue entre la surface périphérique (4) de l'élément de support (2) et la surface de fixation (21).

4. Support d'appareil selon la revendication précédente, **caractérisé en ce que** la pièce de serrage (22) est conçue cylindrique et avec un filet extérieur.

5. Support d'appareil selon la revendication 1 ou 2, **caractérisé en ce que** la pièce de serrage (22) est agencée entre la surface de fixation (21) et une pièce complémentaire (24) agencée à l'opposé de la surface de fixation (21).

6. Support d'appareil selon la revendication précédente, **caractérisé en ce que** la pièce complémentaire (24) est agencée quasiment parallèlement à la surface de fixation (21).

7. Support d'appareil selon l'une des revendications 5 ou 6, **caractérisé en ce que** la pièce complémentaire (24) est conçue comme une surface élastique.

8. Support d'appareil selon l'une des revendications 5 à 7, **caractérisé en ce que** la pièce complémentaire (24) est conçue sur l'élément de support (2) ou sur le dispositif de maintien d'appareil (3).

9. Support d'appareil selon l'une des revendications précédentes, **caractérisé en ce que** le dispositif de maintien d'appareil (3) est agencé de façon déplaçable sur l'élément de support (2).

10. Support d'appareil selon l'une des revendications précédentes, **caractérisé en ce que** la surface périphérique (4) de l'élément de support (2) comporte un moyen d'encliquetage (23 ; 37) dans lequel s'engage, par complémentarité de forme, un moyen d'encliquetage complémentaire (29 ; 38) situé sur la surface de fixation (21) ou sur la pièce de serrage (22), dans un assemblage de maintien.

11. Support d'appareil selon l'une des revendications 1 à 9, **caractérisé en ce que** la pièce de serrage (22) est conçue cylindrique et comporte une coulisse de serrage (26) sur le pourtour extérieur, laquelle forme un assemblage de maintien dans une première position de rotation par rapport à la surface de fixation (21), l'assemblage de maintien étant défait dans une deuxième position de rotation.

12. Support d'appareil selon l'une des revendications précédentes, **caractérisé en ce qu'**une ouverture d'accès (50) est prévue dans le dispositif de maintien d'appareil (3), pour le positionnement de la pièce de serrage (22) sur la surface de fixation (21).

13. Support d'appareil selon l'une des revendications précédentes, **caractérisé en ce que** deux ou plusieurs éléments de support (2) font saillie parallèlement les uns aux autres sur l'élément de base (1), et le dispositif de maintien d'appareil (3) est agencé entre les deux ou plusieurs éléments de support (2).

14. Support d'appareil selon la revendication 13, **caractérisé en ce qu'**il est prévu respectivement une surface de fixation pour deux éléments de support (2) opposés.

15. Support d'appareil selon l'une des revendications 13 ou 14, **caractérisé en ce que** les éléments de support sont conçus comme des plaques de support planes (42) avec un côté large sur lequel est agencé le dispositif de maintien d'appareil (3).

16. Dispositif de maintien d'appareil selon l'une des revendications précédentes, **caractérisé en ce qu'**il est prévu au moins une région élastique (51) comprenant une ouverture recouverte par un matériau élastiquement déformable.
